# EUROPEAN PATENT APPLICATION

(11) **EP 1 361 510 A1**
(43) Date of publication of application: **12.11.2003**
(21) Application number: 02354075.0
(22) Date of filing: 29.04.2002
(51) Int. Cl.: G06F 9/45

(54) **Improvements in structuring program code**

(71) Applicant: Hewlett-Packard Company, Palo Alto, California 94304-1185 (US)
(72) Inventor: Reynaud, Sylvain, 69100 Villeurbanne (FR)
(74) Representative: Lloyd, Richard Graham

(57) **Abstract**

A process and associated programs are decribed for structuring program code, comprising the steps of: procuring a syntax tree representative of an input program code; procuring a control flow graph representing the control flow of said input program code; collapsing nodes of the control flow graph so as to obtain a derived graph in which the nodes are each single entry point reducible control flow sub-graphs of the control flow graph; structuring program code corresponding to each sub-graph so that at least some goto statements in the input program code are represented by loops or conditional structures; defining subprograms each based on one of said structured subgraphs, so that the subprograms can be chained in accordance with the derived graph to form output program code having functionality substantially equivalent to that of the input program code.

## Description

### Technical field of the invention

The invention relates generally to computer-implemented techniques, processes and tools for transforming computer program codes, such as by translating between different programming languages, and more particularly to structuring program code by eliminating or at least reducing the occurrence of GOTO statements therein.

### Background art

The operation of computer systems is controlled by program code. Existing software source code has often been written using languages that are goto (or branch) oriented and do not support or encourage modern structured programming control flow constructs. With these kind of languages, the programmer uses a "goto label" or equivalent instruction to cause transfer of control in a program to the indicated "label." Structured programming, in contrast, encourages the use of constructs such as if/then/else conditionals, while or do-while loops. Languages such as C, Fortran, and Cobol, for instance, allow branch oriented programming with much existing code in these languages written to use gotos rather than structured programming control flow constructs. This is also the case with so-called state machine description language programs, such as are known in the telecommunications fields, for instance the Specification Description Language (SDL) - a language standardized by the ITU (International Telecommunication Union) - or the Service Logic Execution Language (SLEL) developed by Hewlett-Packard Company.

The Java language (Java is a trademark of Sun Microsystems, Inc.) is a relatively recently developed programming language that does not allow the use of goto branch constructions to control the flow of program logic. Indeed, Java does not even have a "goto" statement or equivalent available. For reasons to be described in more detail below, transformation of existing branch-oriented code containing gotos into a language such as Java is an exercise that has historically been difficult to do and that requires significant manual effort.

However, conversion of legacy programs into Java is useful to enable advantage to be taken of emerging internet technologies. The following description will focus particularly on transforming existing branch oriented programs (e.g. in assembly language or SLEL) to programs written in the Java language, but there is no restriction on the application of this invention to generation of other languages.

The design of automatic language translation processes generally, and decompilers in particular, involves the general problem of structuring control flows of programs. This general problem has been studied over many years and known approaches to this problem are discussed in the following documents, various aspects of which will be referred to in the following description:
"An Algorithm for Structuring Flowgraphs" by B.S. BAKER, Journal of the ACM, vol.24(1), pp.98-120, January 1977;
"A Structuring Algorithm for decompilation", C. CIFUENTES, Proceedings of the XIX Conferencia Latinoamericana de Informatical, Buenos Aires, Argentina, pp. 267-276, August 1993 [CIFUENTES];
"Structuring Decompiled Graphs", by C. CIFUENTES, Technical Report, Faculty of Information Technology, Queensland University of Technology, Bisbane, Australia, April 1994.

Moreover, various attempts have been made to obtain - at least partly - the elimination of GOTO statements from existing program code.

The document "Eliminating Go To's while Preserving Program Structure", by L. RAMSHAW, Digital Systems Research Center, Palo Alto, California, July 1985 [RAMSHAW], addresses this problem by adding some artificial loop structures to the code.

The document " A formal basis for removing goto statements" , by S. PAN and R.G. DROMEY, in The Computer Journal, vol. 39 (3), Software Quality Institute, Griffith University, Brisbane, Queensland, 4111, Australia, March 1996 and the document "The translation of goto programs to while programs" by E. ASHCROFT and Z. MANNA, in Proceedings of IFIP Congress, Amsterdam, Holland, pp. 250-255, North-Holland Pub. Co., 1972 specifically address this problem and discuss the use of additional variables for the purpose of eliminating the goto statements.

Techniques based on the replication of the code can also be useful for attaining this goal, for instance the techniques which are disclosed in the document "Unravelling unstructured programs", by G. OULSNAM, The Computer Journal, vol. 25 (3), pp. 379-387, Department of Computer Science, University of Queensland, St. Lucia, Australia, August 1982 and also in the document "Conversion of unstructured flow diagrams to structured form", by M. H/ WILLIAMS and H.L. OSSHER, in Computer Journal, vol. 21 (2), pp. 161-167, Department of Computer Science, Rhodes University, Grahamstown, South Africa, 1976.

US-A-6002874, "Method and system for translatina goto-oriented procedural languages into goto-free object oriented languages", addresses the problem of translating into goto-free languages such as Java and proposes the use of a large switch construct to replace the goto statements.

Although these known techniques may permit the number of GOTO statements existing in a program to be reduced, the total elimination of GOTO statements remains a problem. Most of the known techniques for structuring control flows still appear to rely on the use of the GOTO statement in some instances when the program cannot be written with high-level structures only.

In consequence, the presence of a GOTO statement in source code still remains something of an obstacle which prevents any completely automatic translation of such existing code into a structured language where the goto statement is not available - the case of Java code, for instance.

The present invention is directed generally to the provision of the automatic and direct translation of codes - single entry codes and especially multiple entry codes - into, for instance, a structured language where no goto statement is available.

### Summary of the invention

In brief, this is achieved by a process for structuring program code that comprises the steps of:
- procuring a syntactic tree representative of an input program code;
- procuring a control flow graph representing the control flow of said input program code;
- collapsing nodes of the control flow graph so as to obtain a derived graph in which the nodes are each single entry point reducible control flow sub-graphs of the control flow graph;
- structuring program code corresponding to each sub-graph so that at least some goto statements in the input program code are represented by loops or conditional structures;
- defining subprograms each based on one of said structured subgraphs, so that the subprograms can be chained in accordance with the derived graph to form output program code having functionality substantially equivalent to that of the input program code.

The sub-programs can be chained for instance using a state machine.

A single entry point control flow graph is said to be to be *reducible* if no cycle can be entered for the first time at two different places. The invention is based at least in part on the hypothesis that it is possible to restructure a reducible control flow graph so as to eliminate goto statements. The process is particularly adapted for structuring multiple entry point control flows that can be obtained, for instance, with so-called state machine description language programs, such as those that are widely used in the telecommunications fields.

The derived graph is preferably a limit graph comprising the lowest number of reducible single entry point sub-graphs, the control flow graph being decomposed into single entry point flow graphs using interval analysis to generate a set of disjoint, maximal and reducible sub-graphs. The use of interval analysis is particularly suitable since the intervals generated by the interval analysis can be used to detect loops in the single entry point flow graphs.

Suitably, the structuring step can comprise:
- detecting in the sub-graph cycles with single entry points and marking such cycles as loops;
- detecting potential conditional structures in the sub-graph;
- scanning the detected conditional structures in a descending depth first search sequence, marking as conditional structures those of said detected potential conditional structures wherein no path from the header node of the structure to the first node of the structure where any two paths from the header meet is crossed with a marked loop or a previously marked conditional structure,
- introducing in the syntax tree loop structures and conditional structures corresponding to the marked loops and conditional structures in such a way that branch statements remaining in the portion of the input program code corresponding to the sub-graph can be replaced by one shot loop structures to form an output code having functionality substantially equivalent to that portion of the input program code.

The marking of the loops and conditional structures can comprise marking their respective headers and follow nodes and the introducing step can comprise:
checking the nodes of the control flow sub-graphs in a depth first search sequence for being the header or follow node of a structure and,
if the node is a header of a structure, creating in the syntactic tree a structure node of a type associated with that structure,
moving the nodes in the syntactic tree that correspond to nodes traversed in the DFS sequence to depend from the created structure node,
if a node is a follow node of a structure, continuing the DFS sequence, the next structure node created being placed to depend from the parent of the structure node associated with that follow node, the above steps being recursively repeated for the moved nodes.

In a preferred embodiment, at least some goto statements are replaced by one-shot loops by introducing loop structure nodes directly in the syntactic tree to depend from a common ancestor of the goto statement and the target thereof, the basic blocks in the same branches of the syntax tree as the goto statement and its target and the branches inbetween being moved to depend from the introduced loop structure node, the goto statement being replaced by a break or continue statement. This process is computationally more efficient that the known 'edge stretching' technique for tree augmentation described in RAMSHAW.

### Description of the drawings

An embodiment of the invention will now be described, by way of example only, with reference to the accompanying drawings, wherein:
Figure 1A to 1C are examples of structured flow diagrams which can be expressed using the three basic high-level language structures;
Figure 1D-1H are five basic flow diagrams which lead to unstructuredness of the flow control graphs;
Figure 2 is the basic flow chart of a process which permits the automatic generation of Java classes;
Figure 3 illustrates an example of a multiple entry flow diagram which can be processed in accordance with the structuring process described below;
Figure 4 illustrates the syntax tree corresponding to the example of figure 3;
Figure 5 shows the MEP-CFG diagram corresponding to the syntax tree of figure 4;
Figure 6 illustrates dead code elimination;
Figure 7 illustrates the G graph in the example of Fig 3;
Figure 8 illustrates the first derivation step of the G graph providing the G1 graph;
Figure 9 illustrates the subsequent derivation of the G1 graph producing the G2 graph;
Figure 10 illustrates the subsequent derivation of the G2 graph producing the next G3 graph;
Figure 11 and figure 12 illustrate the limit G4 graph which is derived from the G3 graph of figure 10;
Figure 13 illustrates the resulting Java methods corresponding to the originating graph G;
Figure 14 illustrates a loop detection phase of the process;
Figure 15 illustrates a conditional structuring phase of the process;
Figure 16 is a flow chart illustrating the preprocessing phase of the conditional structuring process of Fig 15;
Figure 17 illustrates the marking phase in the conditional structuring of Fig 15;
Figure 18 illustrates an overall tree structuring process;
Figure 19 shows the detail of a LEAVE CONDITIONAL STRUCTURE process;
Figure 20 illustrates an ENTER NEW LOOP STRUCTURE process;
Figure 21 shows the detail of an ENTER NEW CONDITIONAL STRUCTURE process;
Figure 22 shows the detail of a LEAVE LOOP STRUCTURE process;
Figure 23 shows the detail of a CREATE NEW JUMP process;
Figure 24 is a general flow diagram of a tree augmenting process;
Figure 25 illustrates a forward edge augmentation process;
Figure 26 illustrates a backward edge augmentation process;
Figure 27 shows the process used for eliminating unnecessary loops;
Figure 28 illustrates the effect of a structuring operation on the exemplary graph of figure 7;
Figure 29 illustrate the creation of an ordered list of node references;
Figure 30 illustrate the effect of a node reordering process;
Figure 31 illustrates the effect of the tree structuring process;
Figure 32 illustrates the introduction of one additional ONE-SHOT node within the tree augmentation process;
Figures 33a and 33b illustrate the effect of removal of the useless edges in the tree augmentation process.
Figure 34 shows resulting Java code.

### Description of the preferred embodiment of the invention

The preferred embodiment will be described with reference to the structuring and the translation of code into a set of Java classes. The application of the structuring and translation process to provide a set of Java classes is of particular interest, particularly in view of the substantial development of the Internet. However, it should be observed that the structuring and translation processes described may be applicable to any other type of code.

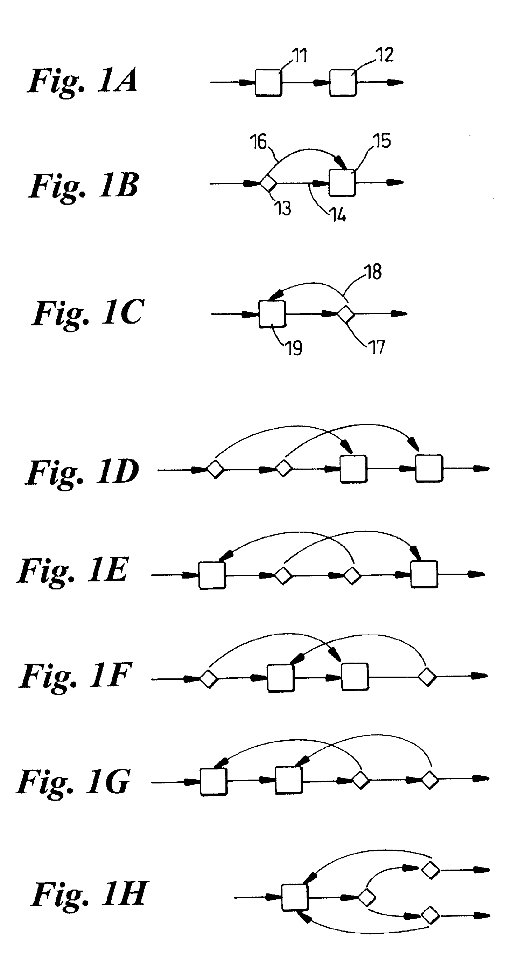

With respect to figure 1A to 1C, there are shown simple flow diagrams which can be used to express the three basic high-level language structures. For the purpose of clarification, a *flow diagram* D is a tuple (*N, E*, *h),* where *N* is the set of nodes, *E* is the set of directed edges, and *h* is the root of the diagram. A node *n* ∈ *N* represents either a conditional jump, e.g. jumps 13 and 17 of figures 1B and 1C, or a label ( ), e.g. labels 11 and 12 of figure 1A. In this flow diagram representation, an edge *e* ∈ *E*, edge 14 or edge 16 in figure 1B, represents a sequence of instructions.

As is well accepted in the art, (see for instance M. H. WILLIAMS, "Generating structured flow diagrams: the nature of unstructuredness", The computer Journal, vol. 20(1 pp. 45-50, Department of Computer Science, Rhodes University, Grahamstown, South Africa, 1976 [WILLIAMS]), a *structured flow diagram* is a flow diagram that can be decomposed completely in terms of these three basic high level structures. Figure 1A shows the simple sequence of labels 11 and 12. Figure 1B illustrates the selection flow diagram (IF-THEN-ELSE) where conditional jump 13 leads to label 15 either by the sequence of instructions of edge 14 or those of edge 16. The flow diagram of the classical repetition (WHILE-, DO-WHILE) is shown in figure 1C.

Figure 1 D to 1 H illustrates the five basic structures which lead to *unstructuredness* of the control flow graph - in other words the presence of such structures make it impossible to decompose the flow diagram in terms of the basic structures of Figs 1A, 1B and 1C. Figure 1D is the abnormal selection path, while figure 1E is the loop having multiple exit points. The loop with multiple entry points is shown in figure 1F and the overlapping loops are shown in figure 1G. Finally, figure 1H illustrates parallel loop structures.

The process which is described below provides for the structuring - in the sense of transforming code that is to some extent unstructured into code that is structured to a greater extent to allow subsequent translation of the structures. As will be described in more detail below, this is achieved by abstracting the flow control from the code, dividing the code into portions based on the flow control, detecting structure within the flow control and using the detected structure information to reorder and add high level control flow instructions to the code in a certain way so that, when the technique is applied in conjuction with known techniques for eliminating illegal branches, the resulting code is structured.

The following description will refer to a flow control graph representation in which nodes represent basic blocks within the code and edges represent the control flow linking the basic blocks. As is well understood, a basic block is a sequence of consecutive instructions for which the flow of control enters at the beginning of the sequence and exits at the end thereof without a wait or branch possibility, except at the point of exit. Thus, what will be referred to as a Multiple Entry Point Control Flow Graph (MEP-CFG) is a tuple (*N, E, H*), where *N* is a set of nodes, *E* is a set of directed edges, and *H* is a set of roots. A root *h* ∈ *H* represents an entry point in the graph.

RAMSHAW describes structures based on sequences of instructions instead of flow diagrams that are broadly equivalent to, but not precisely the same as, those defined by WILLIAMS. The structures described by RAMSHAW are referred to as *forward-forward, tail-to-tail, head-to-head and backward-backward* crossing structures. These correspond to the flow diagrams of Fig 1D, 1E, 1F and 1G respectively. It should be noted however that, for instance, a loop with multiple entry points - Fig 1F - always leads to a head-to-head crossing structure pattern, but a head-to-head is not necessarily a loop with multiple entry points.

Head to head crossing structures and an MEP-CFG with multiple entry points are normally not translatable into Java structures using known techniques.

There will now be discussed how the structuring and translation of any flow diagram, including a MEP-CFG can be achieved using an automated analysis of the MEP-CFG, followed by a transformation and division of the latter into a set of Control Flow Graphs that can be, after tree structuring and tree augmentation, translated into Java code.

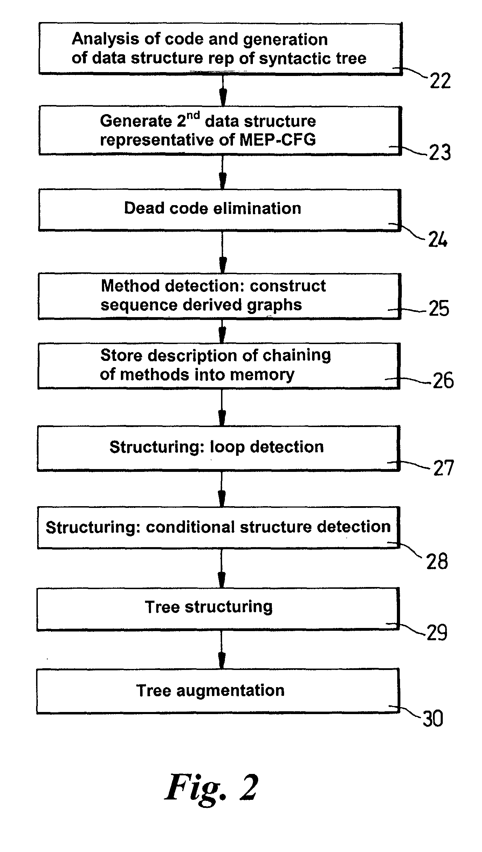

With respect to figure 2 there is illustrated the general architecture of the structuring and translation process.

### Generation of the Syntax Tree

The process starts with a step 22 where the code to be translated is parsed and analyzed for the purpose of generating a first data structure representative of the syntax tree of the code to be translated.

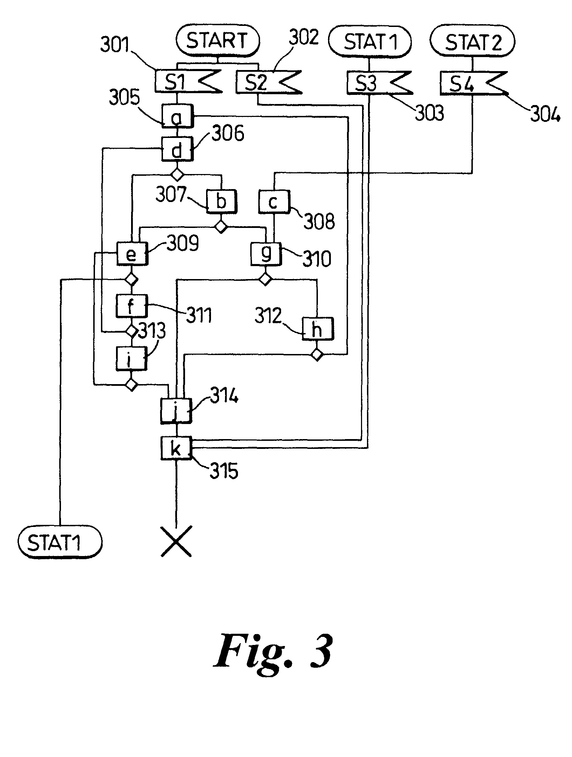

In the examples to be discussed below, the code to be translated is in the form of Specification Description Language (S.D.L.) or Service Logic Execution Language (S.L.E.L.) code which typically is used to describe state machines in the telecommunications field. For the sake of clarity, an example of a SLEL source code is provided below and is illustrated in figure 3.

### Example 1

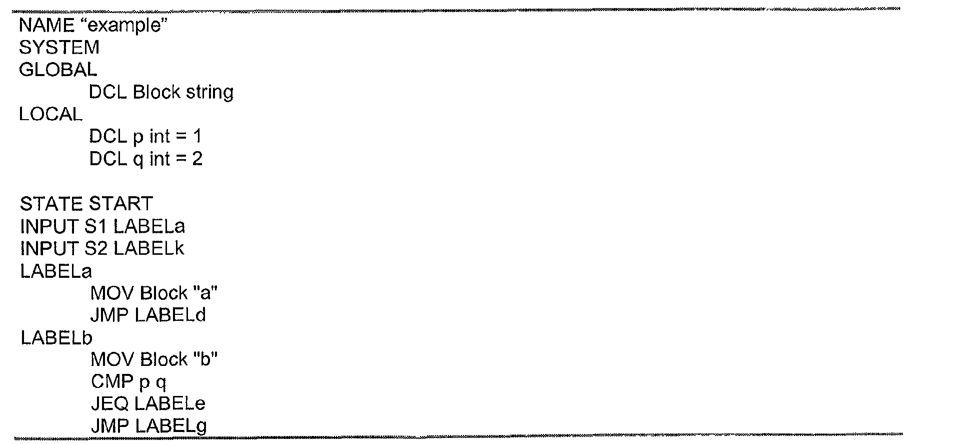

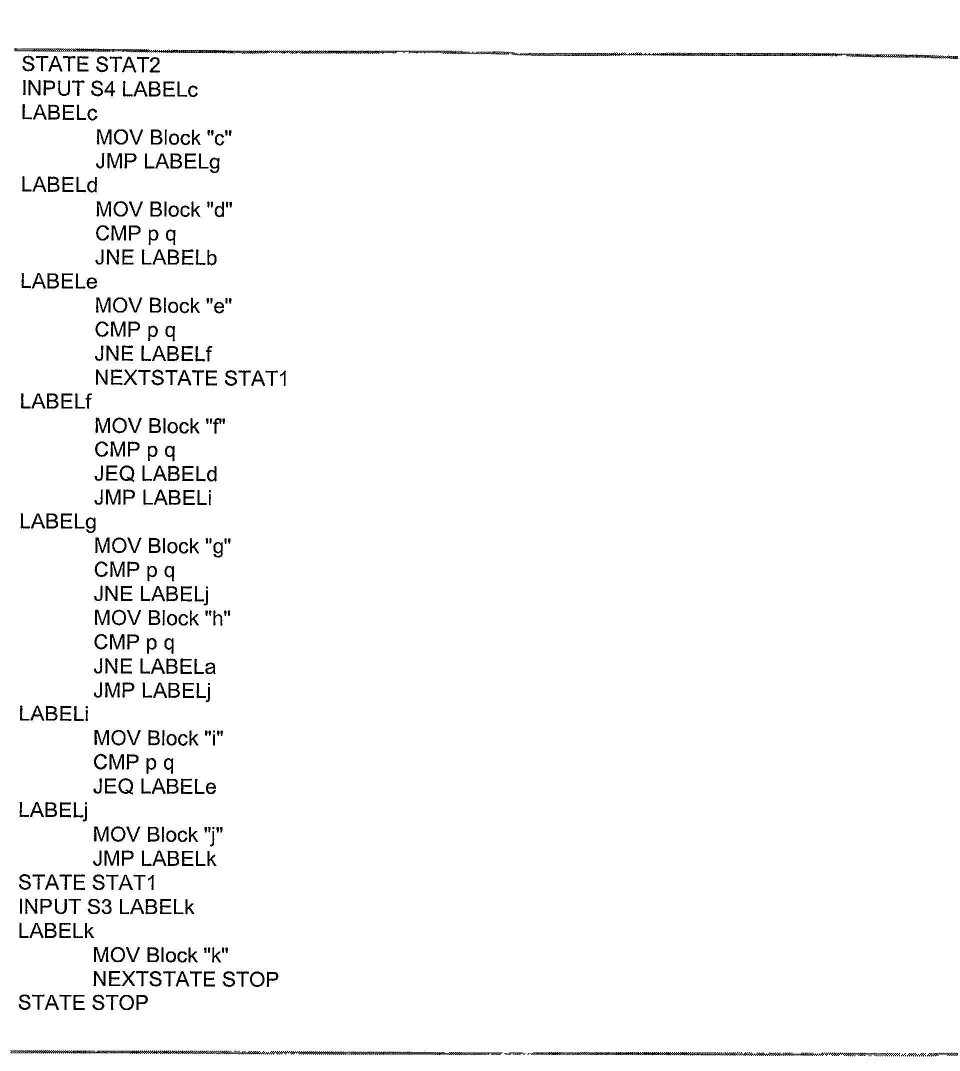

In the state machines described with such languages, one or more signals are used to trigger the execution of the transition from one state to another state. In such state machines, a transition is composed of executable code, and different entry points exist for executing the process corresponding to the state machine transitions. This executable code is represented with a flow diagram which has multiple entry points. Figure 3 illustrates an example of a state machine, which has such a multiple entry point flow diagram. This kind of representation is well known to the skilled man but it should be noted that, conversely to the representation of figure 1, the blocks of instructions are now represented by nodes and the control flow is represented by the edges.

As can be seen in figure 3, the flow control includes eleven labels or nodes corresponding to blocks of instructions: respectively a node 305 (represented as node a in the figure), a node 306 (node d), a node 307 (b), a node 308 (c), a node 309 (e), a node 310 (g), a node 311 (node f), a node 312 (node h), a node 313 (i), a node 314 (j) and a node 315 (k). A set of four distinctive signals, respectively a signal 301 (S1), a signal 302 (S2), a signal 303 (S3) and a signal 304 (S4) correspond to the different entry points of the code. When the machine starts, in response to the detection of signal S1 the flow goes towards a label (a) for the purpose of executing the instructions contained within the corresponding block of instruction of node 305. Similarly, at the start of the machine, in response to the detection of signal 302 (S2), the state machine proceeds with the execution of the block of instructions corresponding to a node 315 (k). In the example shown in figure 3, when the machine is in the state 1, the occurrence of a S3 signal 303 causes the execution of the block of instructions corresponding to node 315 (k). Different edges in the figure represent the particular flow control which is associated with this state machine and which can vary in accordance with the particular SLEL source code which is to be translated.

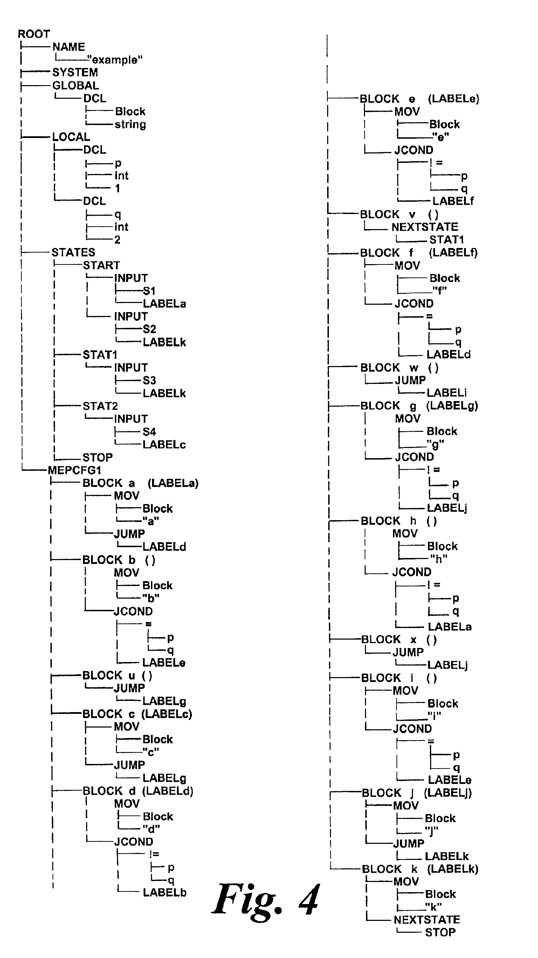

The analysis and the processing of the SLEL. code results in the generation of a first data structure, stored within the memory of a computer, which is representative of the syntax tree corresponding to the code. Figure 4 illustrates the syntax tree corresponding to the example of figure 3. The concept of a syntax tree is well known in itself and, in consequence, will not be described in detail herein.

### Generation of MEP-CFG

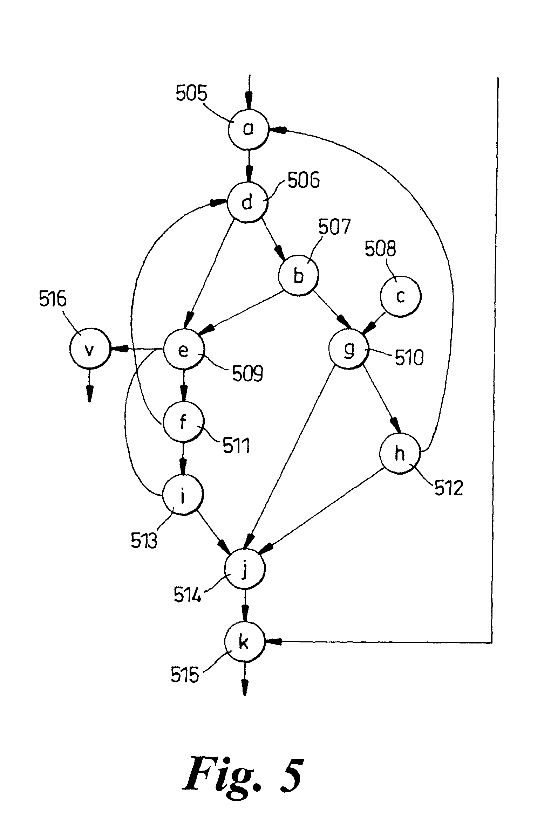

In a step 23, the process then generates a second data structure which is representative of a Multiple Entry Point Control Flow Graph (MEP-CFG) diagram such as that illustrated in figure 5. Any suitable technique can be used for storing within the memory of a computer a representation of the MEP-CFG flow graph. For the sake of clarity, the reference numbers of the nodes of the MEP-CFG graph of figure 5 closely correspond to those of the SLEL source code flow diagram of figure 3. For instance, the node (a) of figure 3 bears a reference number 305 and corresponds to a node 505 in the MEP-CFG graph of figure 5. The same applies for all the other nodes b-k.

### Dead Code Elimination

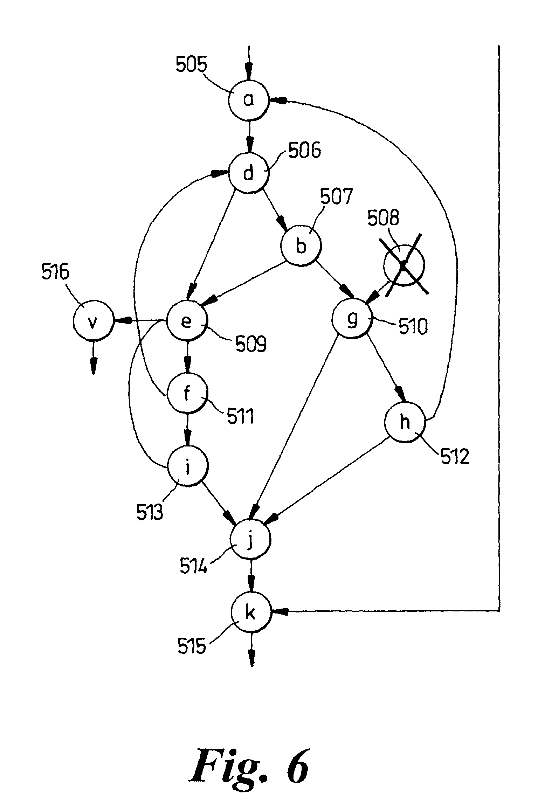

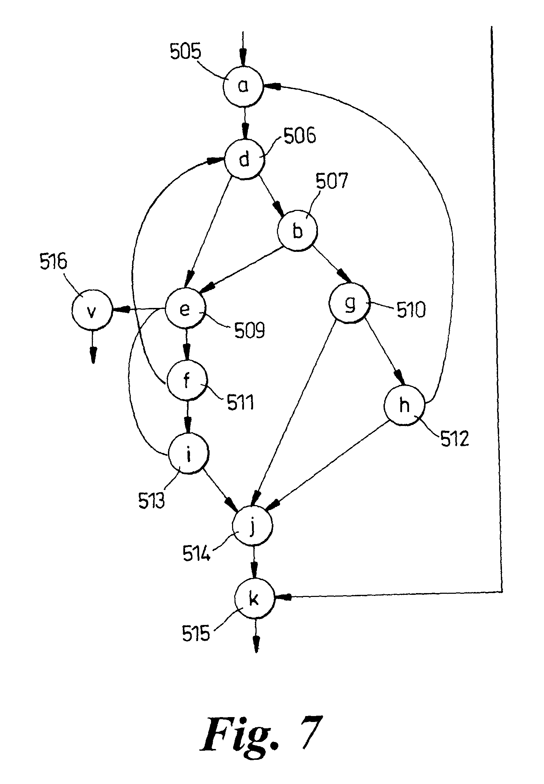

In a step 24, the process performs an elimination of dead code, e.g. the elimination of the block instructions which correspond, in the particular example being considered, to node 508 (node c) as illustrated in figure 6. This leads to the reduced MEP-CFG graph of figure 7 which will then be processed in accordance with the method detection process described below. The preliminary dead-code elimination of step 24 avoids any unnecessary subsequent transformations of the representation of the MEP-CFG which is stored within the memory of the computer which has to generate the Java classes. The elimination of dead code is known in itself and can be achieved by any suitable algorithm which permits nodes having no antecedent to be detected, and which removes those nodes from the corresponding MEP-CFG representation.

### JAVA Method Detection

After the elimination of the dead code in step 24, the process divides - in step 25 - the code into portions based on the flow control. As will be described in more detail below, each of these portions will correspond to a separate Java method in the resulting code. The purpose of this step is to be in a position to manipulate only *reducible* sub-graphs in the next steps. A single entry point control flow graph is said to be to be *reducible* if no cycle can be entered for the first time at two different places.

Non-reducible graphs, including multiple entry point CFGs, cannot be translated by using high level structures available in the Java language. It is therefore necessary to carry a division into *reducible* graphs that, as will be shown below, it is possible to translate.

The division is based on a construction of a sequence of derived graphs from the MEP-CFG representation of figure 7.

The construction of derived graphs is based on an iteration of the interval construction algorithm such as described in "Global Common Subexpression Elimination", by J. COCKE, SIGPLAN Notices, vol. 5 (7), pp. 20-24, July 1970.

Interval theory has traditionally been used for data-flow analysis and for structuring loops in a decompiled flow graph. The technique is used in the present embodiments for the different purpose of detecting the maximal *reducible* sub-graphs, ie the code is divided into the smallest number of graphs that can each be translated into Java methods using the techniques to be described below.

An Interval *I(h)* is the maximal, single entry sub-graph in which *h* is the only entry node and in which all closed paths contains *h*. The originating graph of the MEP-CFG is partitioned into an unique set of disjoint intervals in accordance with the derivation algorithm of ALLEN and COCKE, as described in the document "A Program Data Flow Analysis Procedure" F.E. ALLEN and J. COCKE, Communications of the ACM, vol. 19(3), pp. 137-147, March 1976. Basically, the algorithm operates as follows: the derived sequence of graphs G¹ .... Gⁿ is constructed using an iterative method that collapses intervals. The first order graph G¹ is G (which would correspond of control flow of figure 7, for instance), and the k^{th} order graph, G^{k}, is derived from G^{k-1} by collapsing each interval in G^{k-1} into a node. The immediate predecessors of the collapsed node are the immediate predecessors of the original header node, which are not parts of the interval. The immediate successors are all the immediate, non-interval successors of the original exit nodes. The process is repeated until a limit flow graph Gⁿ is found which comprises nodes representative of intervals. The limit flow graph Gⁿ is a set of disjoint, maximal and reducible sub-graphs. Each interval from the limit flow graph Gⁿ will correspond to a Java method. It should be noted that the limit flow graph Gⁿ also represents the chaining of the different methods.

Below is shown, for the purposes of illustration, an example of high-level meta code which illustrates one implementation of the construction of the sequence of derived graphs:

### Example 2

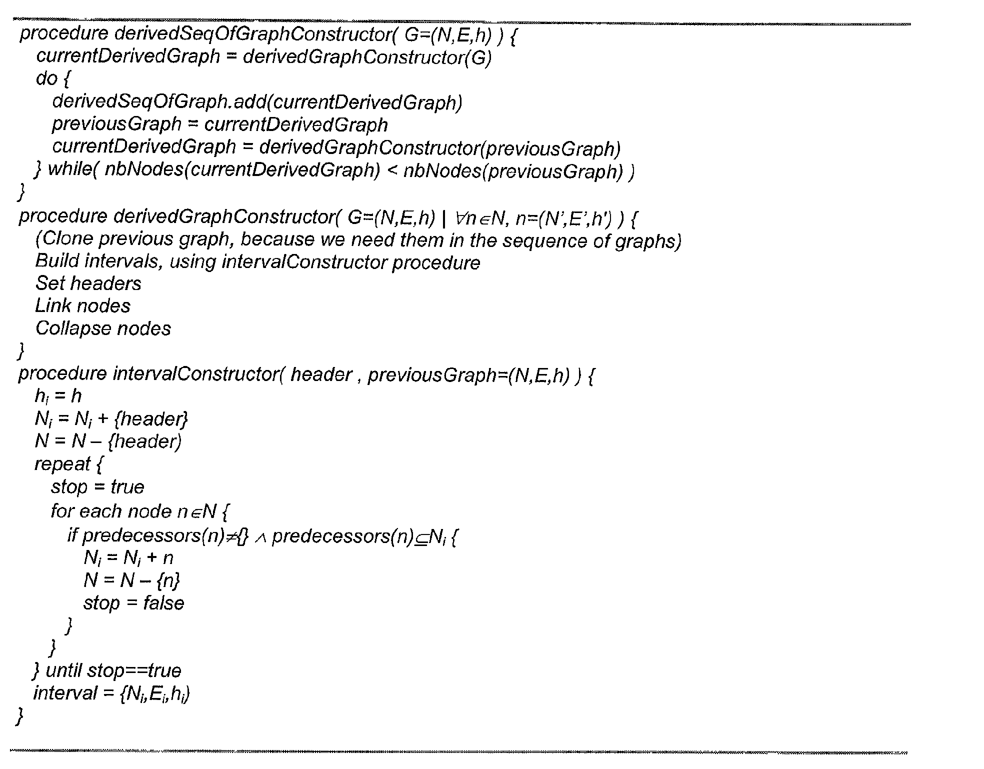

This process is initialized with a set of roots corresponding to all the entry points. This permits the processing of code having multiple entry points.

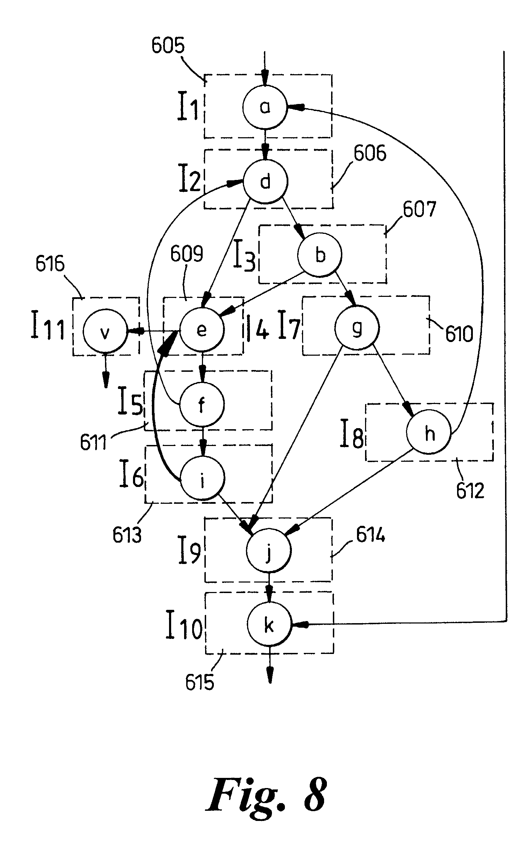

The execution of the method detection process of step 25 is illustrated in the sequence of figures 8 to 12.

With respect to figure 8, there is illustrated the generation of the G1 sequence from the originating G graph. In this process, the node (a) is identified with an interval **I1** (605); node (b) is identified with a new Interval **I3** (607); node (d) is associated with a new interval **I2** (606); node (e) is identified with a new Interval **I4** (609); node (v) is identified with a new interval **I11** (616), node (g) is identified with a new interval **I7** (610), node (f) is identified with a new interval **I5** (611); node (i) is identified with a new interval **I6** (613); node (j) is identified with a new interval **I9** (614) and node (k) is identified with new interval **I10** (615).

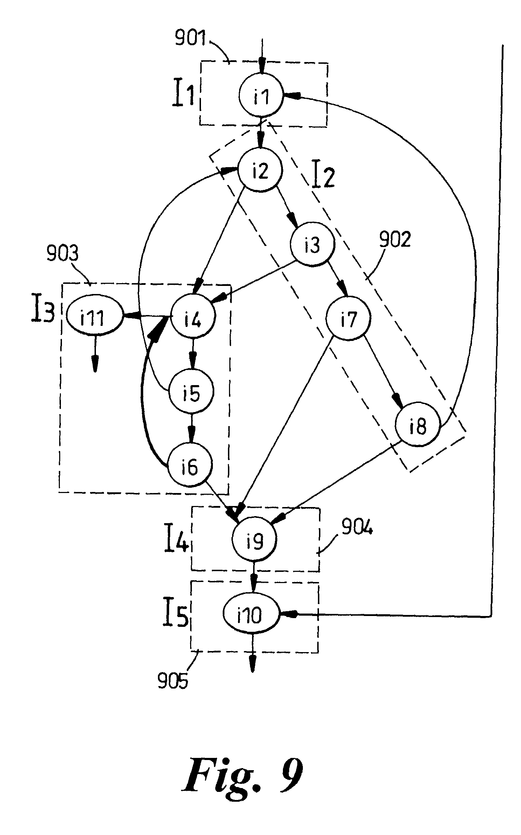

Figure 9 illustrates the generation of the G2 graph. This is achieved by applying the derivation process to the graph made up of the intervals **I1-10** of figure 8 (and now represented in figure 9 by nodes i1 to i10 with a small "i"). This leads to the generation of a new sequence of intervals, namely intervals **I1-15** respectively assigned the reference number 901-905. More particularly, new interval **I1** (ref. 901) corresponds to the node i1 (ie the interval I1 of figure 8). New interval **I2** (ref. 902) now corresponds to the set of nodes i2-i3-i7 and i8. New interval **I3** (ref. 903) contains nodes i4, i5, i6 and i11. New interval **I4** bearing the reference number 904 corresponds to the node i9, i.e. the Internal I9 of figure 8. New interval **I5** (905) contains single node i10.

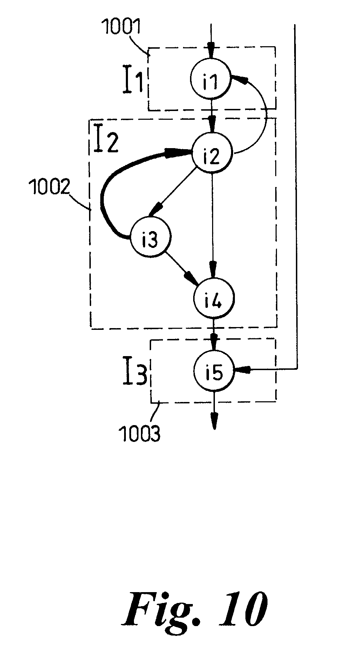

Figure 10 shows the iteration of the derivation process on the flow graph G2 of figure 9 for the purpose of generating the G3 graph. An new interval **I1** (ref. 1001) is computed which contains node i1 corresponding to interval I1 of figure 9. A new interval **I2** (ref. 1002) contains nodes i2, I3 and i4 , that is to say previous intervals I2, 13 and I4 of figure 9. Finally, a new interval **I3** contains node i5 corresponding to previous interval I5 of figure 9.

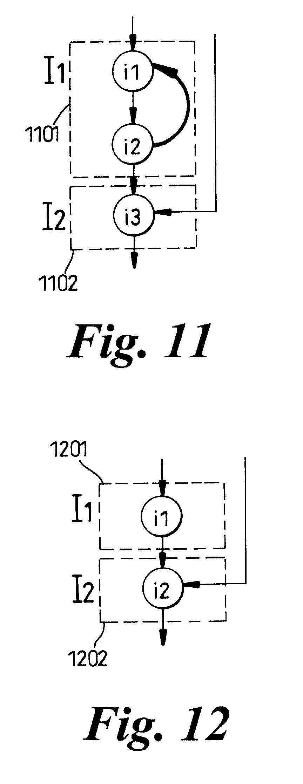

Figure 11 and figure 12 show that the graph limit G4 comprises two remaining intervals: an interval 1101 (i.e. node i1 and I2) and an interval 1102 (node i3) in figure 11. The reiteration of the derivation process on G4 results in a new graph G5 which, as for the G4 graph, contains two remaining intervals.

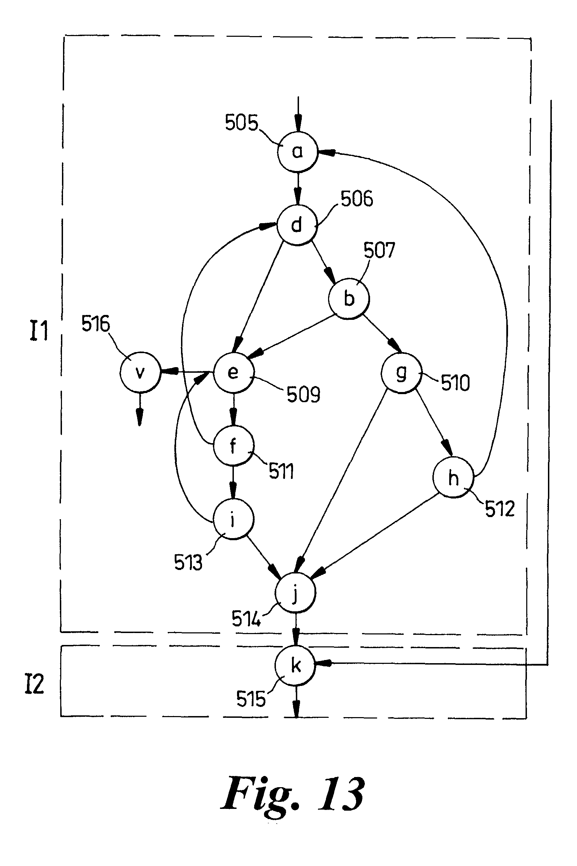

It can be seen that when the derivation algorithm has been completed, there is provided a set of graphs or sub-graphs which only has one unique entry point, as illustrated in figure 13. In figure 13 there is shown only two sub-graphs I1 and I2 which respectively contain, on one hand, nodes a, d, b, e, f, I, j, v, g, h and, on the other hand, node k. These two sub-graphs I1 and I2 correspond to the methods which will be called in the Java program.

With respect to figure 2 again, it can be seen that the detection of the methods is then followed by a step 26 where the process derives from the knowledge of G¹ and Gⁿ graphs (the latter graph being G⁴ in the case of our particular example) a description of the chaining of the different methods which were detected, and that description is stored within the memory of the computer where the translation process is being executed. To achieve this, the process considers the graph Gⁿ which bears the destination method, and the graph G¹ which contains the node which will lead to said destination. The methods which are provided are chained at run-time because the choice of the next method depends on the execution path chosen into the current method.

In one embodiment the chaining process of the execution paths between the different methods is based on a state machine. This provides a substantial advantage since it reduces the risk of memory overflow due to the stacking methods. Indeed, it has been found that chaining methods using stacked methods tends to saturate the stack when the methods are called within a loop. To avoid this, a new invoke method is created, which coordinate the calling of methods with the help of the invoke method from the *java.lang.reflect.Method class.* Each method returns the name of the next method to be called. An example of this is provided as example 3.

### Example 3

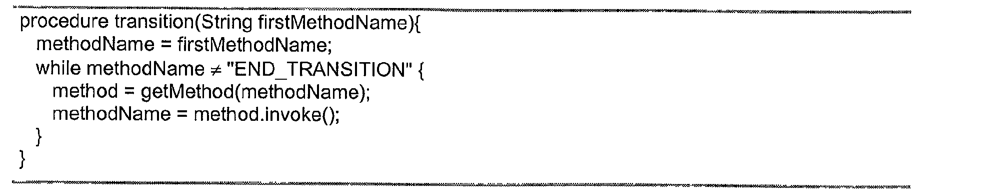

In one embodiment, the additional "invoke" class can be provided in a separate archive jar file. Alternatively, the "invoke" class file is embedded in the same jar archive file which contains the Java method classes. In this way, stack overflow can be avoided.

Note that the limit flow graph Gn could equally be calculated using a simpler recursive algorithm. This simpler algorithm collapses two nodes, which are linked with an edge, into a single new node, unless one of these two nodes is the destination of two different edges. This action can be repeated recursively, until no more nodes can be collapsed together. The graph resulting from the execution of this algorithm is equivalent to the limit flow graph Gn. In the preferred embodiment, this simpler algorithm is not used, because it is less costly overall to use the sequence of derived graphs - this sequence being also used for the loop structuring phase to be described below.

### CFG Structuring

Following the method detection and the extraction of the method chaining, the translation process then proceeds with the structuring of each of the Control Flow Graphs. This results from two successive phases: a loop detection in a step 27 and a conditional structure detection in a subsequent step 28. The nodes of the control flow graph - which will be referred to in the following description as basic block nodes since that is what they represent - are then marked so as to represent certain of the loops and conditional structures implicit in the control flow structure. Note that it will be clear from the description that follows that not all possible loop or conditional structures are identified as such. Rather, some branches that could be structured as loops or conditional structures are left as branches, since these can be replaced advantageously by one-shot loops in the subsequent processing.

### Loop Detection

Step 27 of Fig 2 carries out the detection of the different loop structures based on the derived sequence of graphs described. This permits the graph derivation to be used to detect the Java methods and also to determine the loops. The algorithms of step 27, and also step 28 described below, further permit WHILE, REPEAT-UNTIL and REPEAT FOREVER loops, and lF/lF-ELSE conditional structures to be distinguished. The algorithm of step 27 detects true loops, i.e. loops which will be translated with a WHILE, DO-WHILE or FOR statement, and structures them. A true loop is a cycle with a single entry point.

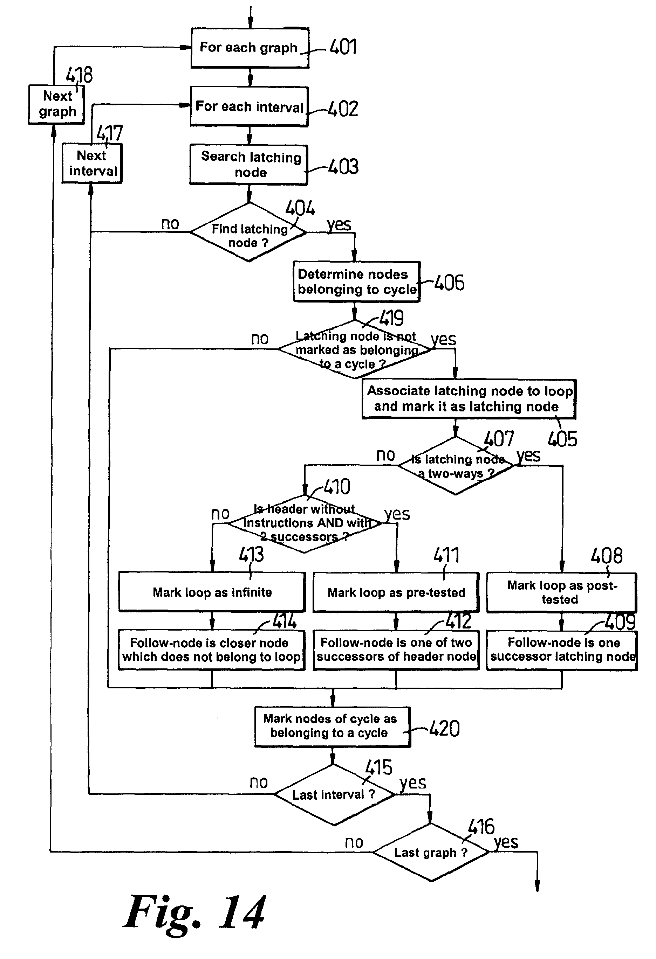

As explained above, the process employs the sequence of derived graphs computed during step 25, and represented in figures 8-12. An iterative process which is illustrated in figure 14 is based on a first graph loop 401 and a second interval subloop 402. That interative process is executed on every graph of the sequence of derived graphs, as illustrated in figure 14, and starting with graph G¹ as represented in figure 8.

For each graph, the loop detection process is performed as follows, based on an iterative process of every interval of the current graph.

Considering graph G1, for instance, the loop detection step is based on a first process of interval I1.

In a step 403, a search is conducted for an existing latching node, which corresponds to the end of a possible loop, and the result is tested in a step 404. A latching node is a node which precedes the entry point of the loop, the latter being the unique header of the considered interval (since the method detection of step 25 leads to intervals with unique entry points). When the process detects, for one given interval, the existence of a latching node for that interval in step 404, this means that there is a loop existing in that interval. Practically the detection of a latching node is accomplished by checking, for each given interval of the graph, if the predecessor of the header of the considered interval is also included into this interval. In that case, the process concludes the existence of a latching node which is precisely this predecessor.

It will be understood that other means could used for detecting the latching node in steps 403-404. In one embodiment, the latching node can be detected by means of an exhaustive and comprehensive test performed on each node of the considered interval. In another embodiment, the process can use a data structure which provides a direct access to each predecessor of every header of the intervals, thus minimizing the processing resources required for the test.

If a latching-node is detected, then the process proceeds to step 406 where a set containing the different nodes belonging to the cycle is built. In one embodiment, the determination of the different nodes belonging to the loop is achieved by means of an algorithm such as the one described in "Compilers: Principles, Techniques, and Tools", by Alfred V. Aho, Ravi Sethi and Jeffrey D. Ullman, Addison-Wesley Publishing Company, 1986, pp 602-605 and well known to the skilled man.

Cycles detected in this way are then selected by a test - shown as 419 - that checks whether the latching pode of the cycle does not belong to a cycle that has alreadv been detected. This test avoids the generation of backward-backward crossing structures. If the latching node has been marked as belonging to a cycle, then the process proceeds to a step 420.

If the latching node does not belong to a cycle that has been detected, then the process proceeds to a step 405 where the latching node is associated with the loop header, and marked as latching node, resulting in the update of the data structure associated with the MEP-CFG graph being considered.

The particular type of loop is then ascertained by tests performed on both the latching node and the header of the considered loop. More particularly, in a step 407, the latching node is tested to determine whether it has two successors, in which case the process proceeds to step 408 where the loop is marked as being a post-tested loop (corresponding to a do-while). Conversely, if the latching node does not have two successors, the process proceeds to step 410 where a double condition is tested. The process checks whether the header- i.e. the first block of instructions of the considered loop - has two successors and, further, whether there is no instruction within this particular header.

If the two conditions are fulfilled, then the process proceeds to step 411 where the loop is being marked as "pre-tested" (corresponding to a WHILE loop). In the reverse situation, the process proceeds to a step 413 where the loop is marked as being "infinite".

The determination of the follow-node is then achieved in accordance with the particular type of loop which was determined in steps 408, 411 and 413. In the case of a "post-tested" loop, the process proceeds from step 408 mentioned above, to a step 409 where the follow-node is determined as being one between the two particular successors of the latching node. To achieve this, the list of the nodes belonging to the loop which was determined above in step 406 is consulted, and the follow-node is identified as the successor of the latching node which does not belong to that list. The data structure is then updated with this information accordingly.

If the loop is a "pre-tested" loop, the process proceeds from step 411 to a step 412 where the follow-node is searched among one of the two successors of the header of the particular loop being considered. For that purpose, the process operates in a similar manner to that described above: the list of the nodes belonging to that loop is considered, and the follow-node is identified as being the particular successor which does not belong to this list.

Finally, in the case of an "infinite loop", the process proceeds from step 413 to a step 414 where one follow-node is computed. However, it should be noted that, in this case, the follow-node might well not exist at all. For the purpose of the computation of that follow-node, the process successively considers every node belonging to the loop and considers each successor for this particular node. Each of these successors will be a possible candidate for the follow-node. In one embodiment, the follow-node will be determined by computing the minimum 'distance" (in terms of separating nodes) from the header of the loop. In one preferred embodiment, a particular algorithm, known as the REVERSE FIRST ORDER NUMBERING is used for assigning a weight or a ranking representative of a "distance" in terms of separating nodes.

It should be noted that such a process can take advantage of the Depth First Search DFS algorithm known in the art of computing. The use of the DFS algorithm, and the storage of the ranking provided therefrom into the data structure, is advantageous because when the "ranking" is computed, it can immediately provide the follow-node without requiring additional processing resources.

When the determination of the follow-node is complete, the process proceeds to a step 420 where the different nodes belonging to the cycle are marked as such.

The process then proceeds to step 415 for the purpose of processing a next interval in a step 418 leading back to step 402. This also occurs if the test of step 404 fails. If no interval remains unprocessed, the process proceeds from step 415 to a step 416 for the purpose of checking whether a next graph remains unprocessed and, in this case, the process proceeds to NEXT GRAPH step 417, leading back to step 401. If the last graph has been processed, the loop detection of step 27 then completes.

For the purpose of embodying the particular algorithm in accordance with the description mentioned above and for determining follow-nodes, the reader may take advantage of the general background information which is provided in the fundamental article "A Structuring Algorithm for Decompilation", by C. CIFUENTES, Proceedings of the XIX Conferencia Latinoamericana de Informatical, Buenos Aires, Argentina, pp. 267-276, August 1993 and document "Structuring Decompiled Graphs" , by C. CIFUENTES, Technical Report, Faculty of Information Technology, Queensland University of Technology, Brisbane, Australia, April 1994.

For the sake of illustration, there is provided below an example of an embodiment, written in high-level language, of the loop detection process.

### Example 4

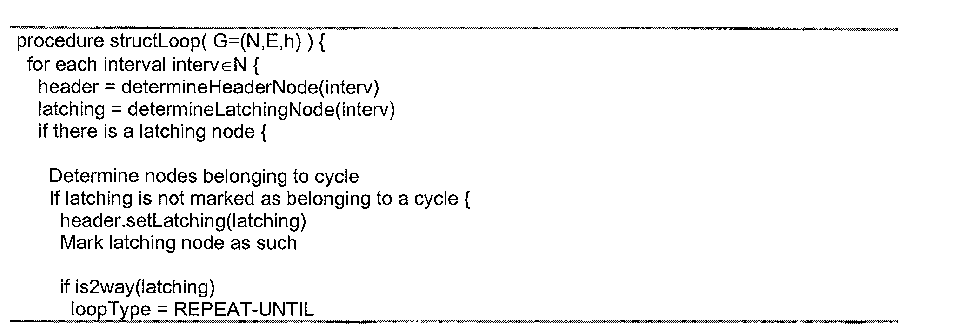

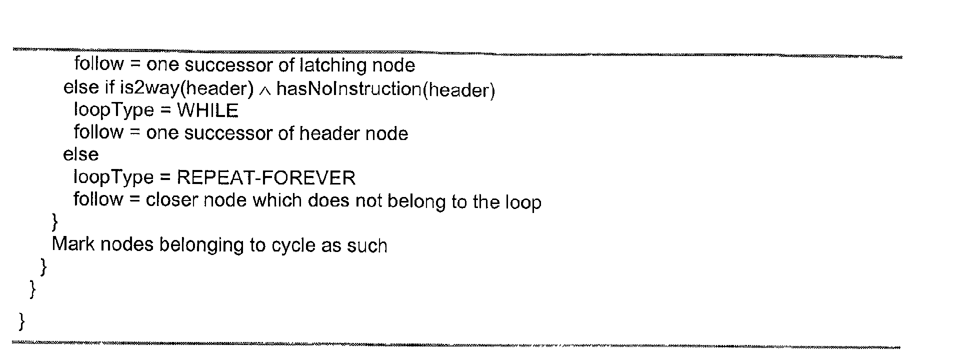

It should be noted that, in the case of a REPEAT-FOREVER loop, the follow node (if any) is the closest node to the loop (i.e. the smallest node in reverse post-order numbering).

### Conditional Structure Detection

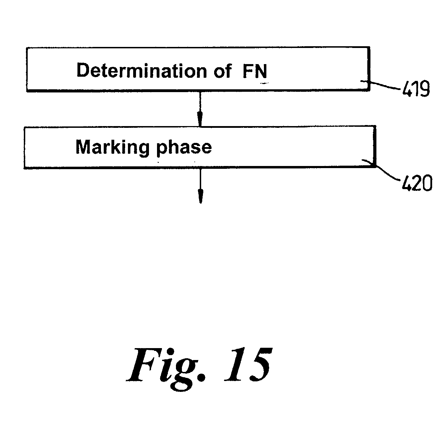

After the completion of the loop detection step 27, the process illustrated in figure 2 then proceeds with the detection of the conditional structures in a step 28. The conditional structuring is based on two distinctive phases as illustrated in figure 15: a first phase for detecting a follow-node, followed by a second phase of marking.

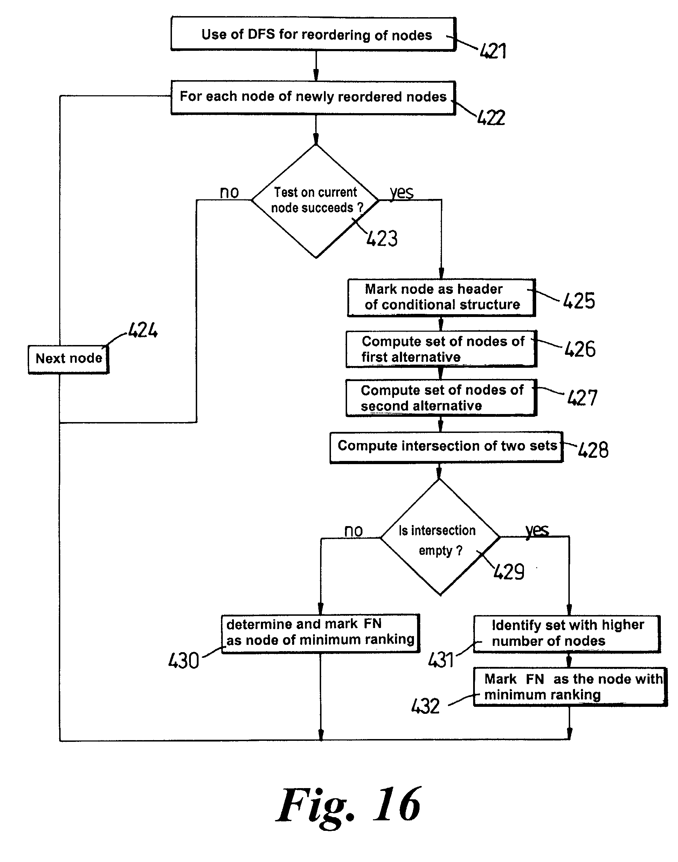

Figure 16 illustrates the preliminary phase which serves for the computation of the follow-node which is the first node where two paths separated on the two-ways conditional node meet each other again.

In a step 421, the process uses a stack ascending Depth First Search (DFS) algorithm for the purpose of generating an ordered list of nodes of the graph G. The Depth First Search algorithm permits an ordering or ranking to be assigned to the different nodes of the graph. In one embodiment, the use of the DFS algorithm leads to a list of ordered nodes which is, for the sub-graph I1 shown for example in figure 13, the following list of nodes (taking successor nodes from right to left):
(a, d, b, e, v, f, i, g, h, j)

In a step 422, each node belonging to this list is successively considered in accordance with the stack ascending DFS. For that purpose, a test is executed in a step 423, which test consists in determining whether the current node has two successors and, in addition, that it is not a header of a WHILE type loop and, finally, that it is not a latching node of an existing loop.

If these three conditions are not simultaneously fulfilled, the test of step 423 fails and the process proceeds to step 424 for the purpose of processing the next node within the ordered list of nodes.

Conversely, if the test of step 423 succeeds, this means that the structure could potentially be either an IF or IF ELSE conditional structure. In this case, the process proceeds to a step 425 where the node is marked as being the header of the conditional structure. Then, in a step 426, all the nodes of the first alternative are computed. Practically, a set of nodes is computed by adding, at every step, the successors of the current node. To achieve this, a recursive algorithm is used with a stop point which corresponds to a back edge or the lack of any successor.

When the set of nodes of the first alternative is computed in step 426, the process then proceeds with a step 427 where a similar computation is carried out for the purpose of computing a set of nodes corresponding to the second alternative of the conditional structure.

In a step 428, the intersection comprising the common part to both sets of alternatives is computed and in a step 429, a test is applied on that common part to determine whether the latter is empty or not.

If the common part is not empty, then the process proceeds to a step 430 where the ranking resulting from the post order numbering is considered and the process returns the node having the lowest ranking among the nodes from the intersection set computed in step 428. This particular node is marked in the data structure as being the follow-node. Then the process loops back to step 422 via step 424.

For the sake of illustration, it can be seen that the algorithm, when applied to the node "d" of the flow graph G of figure 7, leads to two sets of nodes (corresponding to the two alternatives). The first set is composed of nodes {e, v, f, i, j, k}, and the second set is composed of nodes {b, g, h, e, v, f, i, j, k }. The intersection between these two sets is a third set, which is composed of nodes {e, v, f, i, j, k }. The follow node for node "d" is node "e", because node "e" is the node that has the smallest rank in the post order numbering", among the nodes from the third set.

If the common part computed in step 428 is empty, then the test of step 429 succeeds and the process proceeds to a step 431 for the purpose of determining the particular set between the two sets of alternatives which has the higher number of nodes. Then, the process returns, within this set of alternative nodes, the particular node with the lowest post order number ranking. This particular node is then marked as being the follow-node in a step 432, and then the process loops back to step 422 via step 424.

For the sake of illustration, it can be seen that the algorithm, when applied to the node "e" of the flow graph G of figure 7, leads to two sets of nodes (corresponding to the two alternatives). The first set is composed of node {v }, and the second set is composed of nodes {f, i, j, k }. The intersection between these two sets is the empty set. Since the second set contains a higher number of nodes than the first one, the follow node for node "e" belongs to the second set. The follow node for node "e" is node "f", because node "f" is the node that has the smallest rank in the "Post Order Numbering", among the nodes from the second set.

In one embodiment of the invention, the number of nodes which are checked for the purpose of determining this particular two-way conditional structure follow-node which is the follow node can be reduced by taking advantage of the algorithm which is provided in article "A Structuring Algorithm for decompilation", C. CIFUENTES, Proceedings of the XIX Conferencia Latinoamericana de Informatical, Buenos Aires, Argentina, pp. 267-276, August 1993 . Indeed, it can be seen that the follow-node which is computed above is located upstream with respect to the basic follow-node which is disclosed in CIFUENTES. The embodiment can use the algorithm provided in CIFUENTES for the purpose of determining a stop criteria for the follow node determination algorithm which is represented in figure 16. This permits the processing resources required for completing the computation of the follow-node to be reduced.

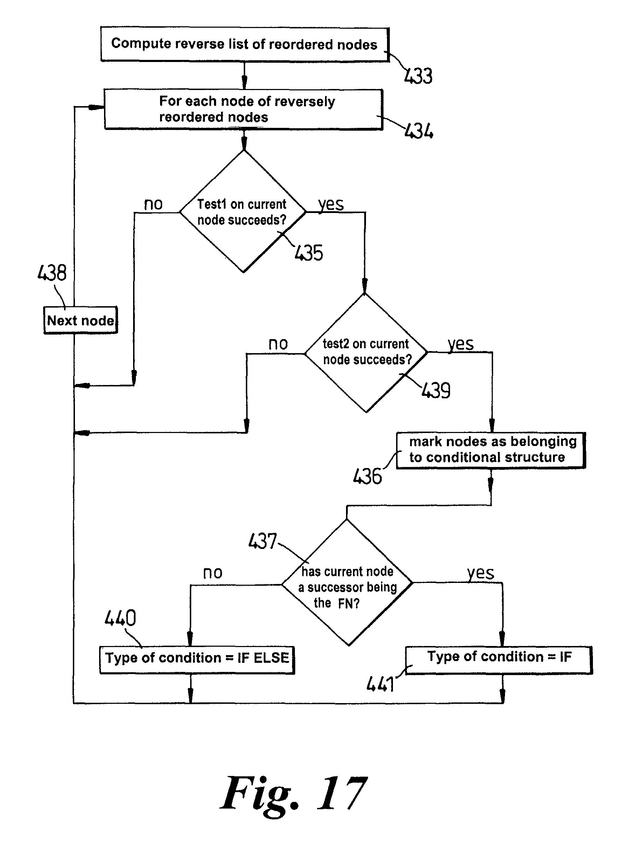

When the follow-node is computed, the process then executes the second phase of the conditional structuring which is the marking phase illustrated in figure 17.

The marking phase starts with a step 433 where the nodes of the graph G are reordered by means of a stack descending DFS algorithm.

Every node of the DFS stack descending list is then processed as shown in loop step 434.

In a step 435, a similar test to that of step 423 is executed. More particularly, the current node is tested to determine whether it has two successors, AND whether it is not a latching node, AND whether it is not a header of a WHILE loop. In other words that the node is potentially the header of a conditional structure.

If the three conditions are not simultaneously fulfilled, then the process proceeds to a step 438 for the purpose of processing the next node within the descending DFS list or ordered nodes.

If the three conditions are simultaneously fulfilled, then the test of step 435 succeeds and the process proceeds to a step 439 where a second test is performed. This test consists in determining whether any edge from the current node to the follow node of the current node is crossed with an existing loop, and further whether it is not a conditional structure with multiple entry points and, finally, whether it is not the origin of a back edge. More practically, to achieve this test, the process successively performs three elementary tests. The first test consists in checking whether the current node belongs to a loop while its corresponding follow node does not belong to a loop. This test can take advantage of the marking operations which were performed in step 27, and more particularly in step 406 of figure 14. The second elementary test of step 439 consists in checking whether where the current node belongs to a conditional structure while its corresponding follow node does not belong to a conditional structure. This is particularly achieved using the marking operation which is performed in a step 436 which follows the step 439 and which is used for progressively and continuously updating the marks contained within the data structure. The third and last elementary test of step 439 consists in checking whether the current node is the origin of a back edge.

If one of the above three conditions tested above is not fulfiled, then the process proceeds to step 438 for the purpose of processing a next node.

Conversely, if the three conditions tested above make the overall test of step 439 succeed, then the process proceeds to step 436 where the current node is marked as belonging to a conditional structure in the data structure. As explained above, the marking process of step 436 continuously updates the data structure for the purpose of achieving a correct test step 439 for each node being considered. Since the nodes are considered in the order of the descending DFS list the case where a branch crosses the arm of a conditional structure does not result in a jump into the arm of a conditional structure. Where a forward-forward type crossing structure exists, only the first possible conditional structure will be identified as such, subsequently processed 2-way nodes that form part of this conditional structure and their follow nodes the other branches being left as such.

After the completion of step 436, the process then proceeds to a step 437 where a test is performed in order to determine whether the current node has a successor which is the follow-node.

If the test of step 437 succeeds, then the process proceeds to a step 441 where the type of conditional structure corresponding to the current node is identified as being an IF structure. The process then loops back to step 434 via step 438. Node e is therefore identified as an IF structure.

If the test of step 437 fails, then the process proceeds to a step 440 where the type of conditional structure corresponding to the current node is identified as being an IF ELSE structure. The process then loops back to step 434 via step 438.

For the sake of illustration, there is provided below metacode of the conditional structure detection of step 28:

### Example 5

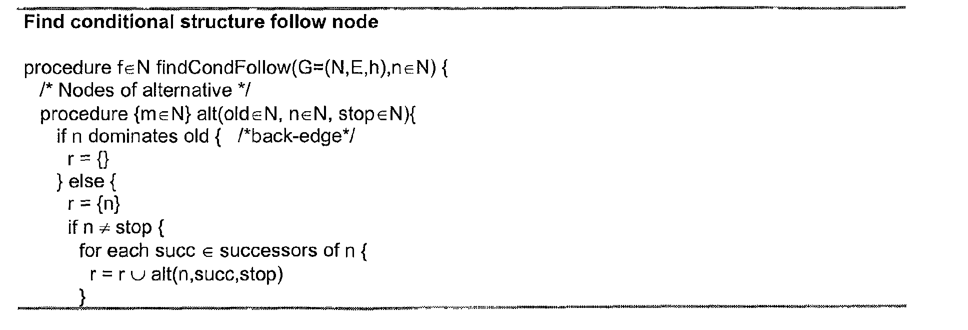

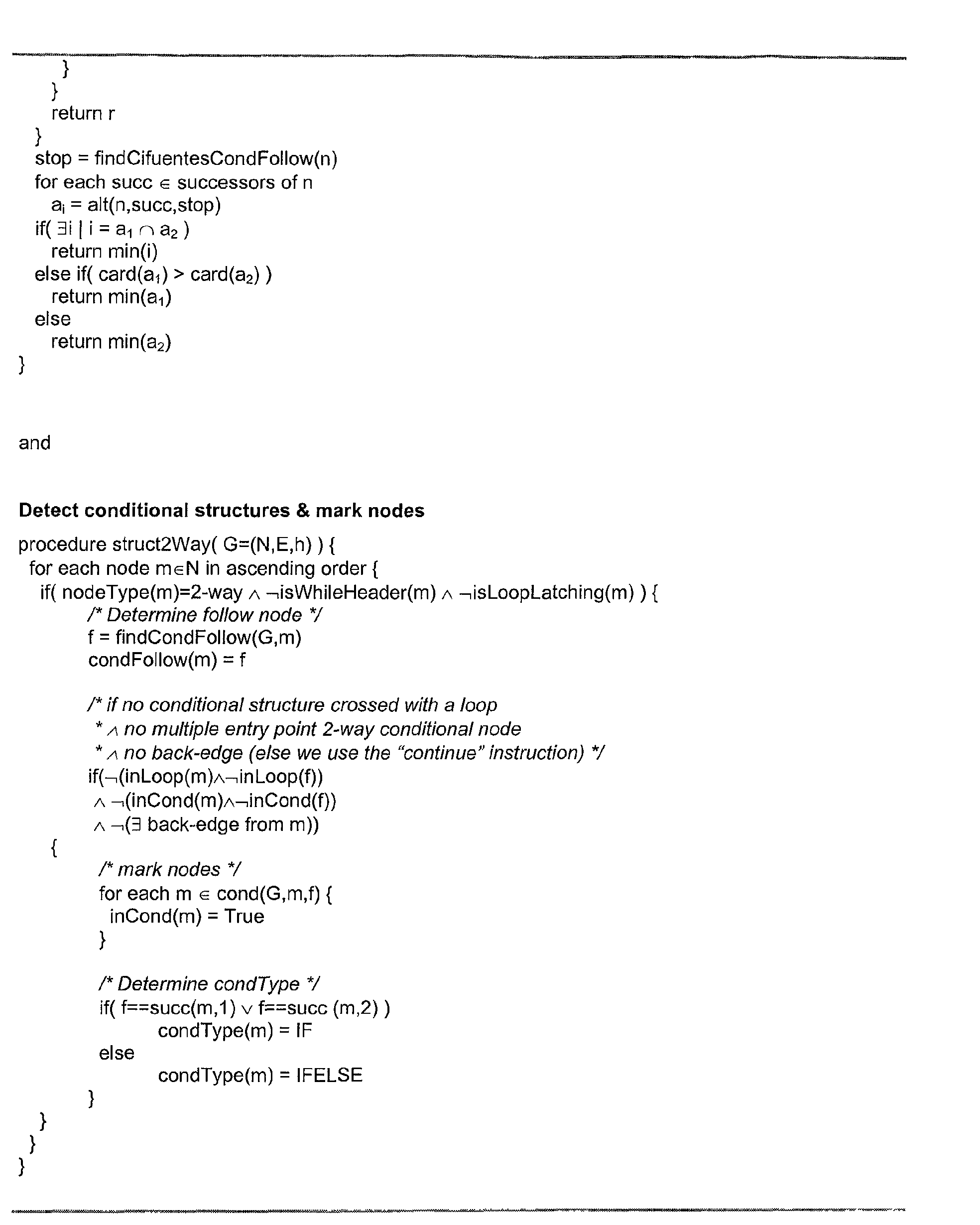

### Tree Structuring

After the completion of the conditional structuring of step 28, an ordering of the nodes of the graph is carried out for the purpose of eliminating GOTO statements within the code corresponding to each reducible subgraphs and to improve the legibility of the resulting Java code. The kind of GOTO statements that are eliminated by ordering the nodes in this way are, for example, those that correspond to those head-to-head crossing structures that do not correspond to loops with multiple entry points. Since multiple entry point loops are by definition not possible in a reducible sub-graph, this technique will deal with all of the head to head crossing structures within each code portion that will correspond to a separate Java method.

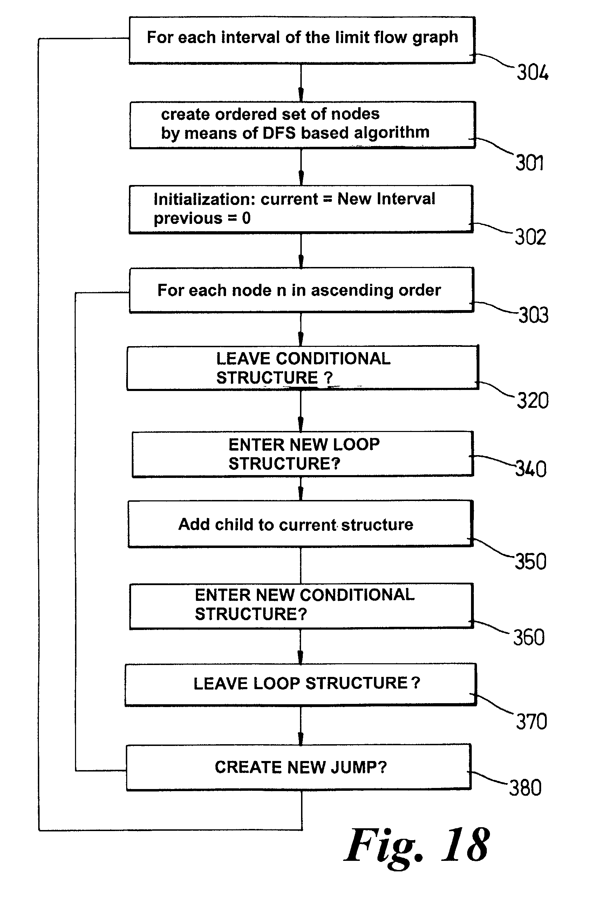

The ordering of the nodes is carried out by the tree structuring process which is illustrated in figure 18. Tree structuring consists of the introduction in the syntax tree of additional nodes corresponding to high level flow control structures (e.g. WHILE, IF etc...) and the move of some of the basic blocks, to be dependent upon these additional nodes. In the following, these nodes that are added to the syntax tree will be referred to as "structure nodes". Nodes of the control flow graphs, that correspond to basic blocks of instructions, and the corresponding nodes in the syntax tree itself, will be referred to as "basic block nodes".

In order to achieve this, the process uses the markings added within the control flow graph data structure, during the loop detection and the conditional structuring detection of steps 27-28.

Each control flow graph is traversed according to a DFS algorithm adapted as described below. Basic block nodes are checked for being the header of a structure, in which case, the appropriate structure node is created in the syntax tree for that structure. The basic block nodes associated with the structure are moved under this structure node, and reordered according to the adapted DFS algorithm, until the follow node of the structure is reached. Once the basic block nodes have moved, tree structuring is continued with the follow node of the structure. Since the graph is traversed according to a depth-first search algorithm, it may be ensured that basic block nodes will never be visited twice.

With respect to figure 18, there will now be explained the detail of the tree structuring process which starts with a step 304. The tree structuring phase uses the result of the CFG structuring phase, and enables the translation of some GOTO statements with high-level structures. The process checks whether there are still intervals to process among the intervals of the limit flow graph Gⁿ. If all the intervals have already been processed, then the process leaves the step 29 (Tree Structuring) and continues with the step 30 (Tree Augmenting). If there are still intervals to process, the process gets a reference to one of the unprocessed intervals and continues with a step 301.

Steps 304, 301, 302, 303, 320, 340, 350, 360, 370 and 380 of figure 18 constitute a loop, which is used for successively processing each interval of the limit flow graph Gⁿ (the order does not matter). Each interval corresponds to a sub-graph, and only the nodes of the current sub-graph are considered during the current iteration of this loop.

The step 301 consists of a computation of a set of ordered nodes by means of a DFS based algorithm. That algorithm is a conventional DFS algorithm, in which certain heuristics are introduced in order to choose the appropriate order for recursive invocations of the procedure with successor nodes.

Like the standard DFS algorithm, the DFS based algorithm used in the present implementation is recursive and the recursion ends when the current node has already been visited or when it has no successor.

In case of nodes with two successors, the order in which successors are processed is unimportant, except that at least two heuristics are added to potentially reverse the default order (i.e. recursive call on second successor before first one) when the current node is not a latching node (for such a node, one of the two paths has necessarily been already visited):
First heuristic: If the two paths starting from the current node never meet again (such a situation can occur when the graph has many exit points), then the first successor node for the recursive call of the DFS based procedure is chosen explicitly so that it corresponds to the follow node of the corresponding conditional structure. Note that in this case the current node has necessarily been marked as a header node of a conditional structure of "IF" type.
Second heuristic: If the current node is the header node of a loop, then the first successor node for the recursive call of the DFS procedure is chosen explicitly so that it corresponds to the follow node of the corresponding loop structure.

In preferred embodiments, other heuristics are added to the DFS algorithm in order to improve the legibility of the generated code. In particular, when a loop header is met, its latching node is stored in an ordered list, and this latching node is removed from the list when it is reached. Then, for each two-way conditional node, instead of choosing the first path randomly, we choose the successor that dominates the latching node of the first loop header that was met. If this latching node dominates none or both successors, then we check this with the latching node of the second loop header, and so on. This technique allows crossing parallel loops to be avoided while reordering the nodes of the graph.

Like in the standard DFS algorithm, the processing on nodes is made after recursion on the successor nodes (i.e. on nodes that have no successor, or while popping the stack of recursive calls). In the preferred embodiment, this processing simply consists in pushing the current node in a stack of nodes, which will be used by the next process.

### Example 6

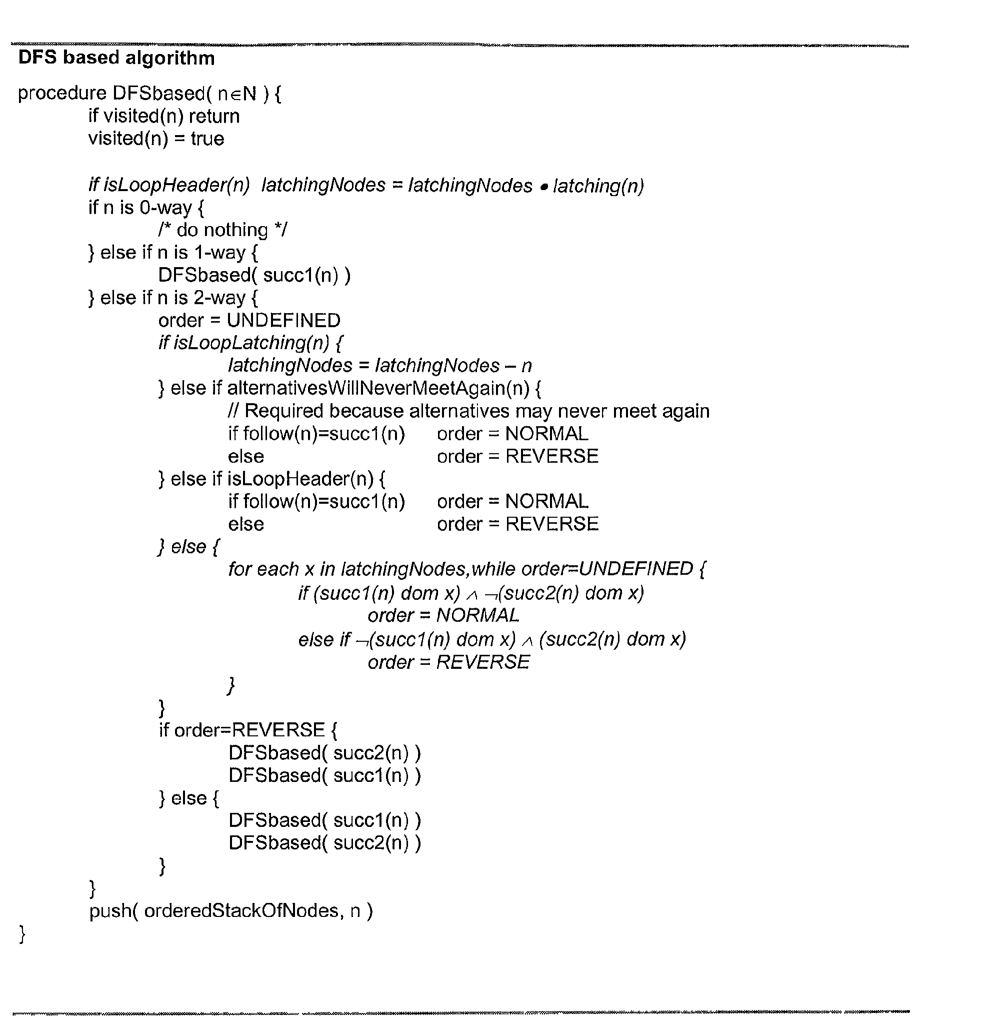

There are only two ways that an instruction sequence containing a head-to-head crossing structure can be derived from a reducible control flow graph. Either the nodes of a conditional structure have been processed such as to create a back edge or a code segment that does not belong to a loop has been inserted inside it. Since precedence relations between nodes are respected by the DFS algorithm, the former cannot happen. Since the code sequence for each alternative path of a conditional structure is not interrupted, the processing of such conditional structures will either take place entirely within a loop or entirely outside it and thus, the latter cannot happen. The sequence of instructions which can be obtained with a DFS algorithm is therefore free of head-to-head crossing structures, and in consequence it can be augmented so that it becomes translatable into Java code.

In one embodiment, a stack is arranged for storing an ordered list of references or pointers to the different nodes of the tree. Therefore, the representation of the syntax tree which is stored within the memory is not actually modified in step 301, but there is the creation of an additional data structure or an update to the existing data structure, the latter being enriched with the new reordering of the syntax tree resulting from the DFS based algorithm.

Steps 303, 320, 340, 350, 360, 370 and 380 of figure 18 constitute a loop which is used for successively processing every node of the sub-graph corresponding to the current interval in the order defined by the list of references computed in step 301.

It should be observed that two different types of objects are considered and processed. First, the basic block nodes that correspond to blocks of instructions of the code to be translated and, secondly, the structure nodes that are not representative of instruction sequences and therefore not referenced in the list of references of step 301. The loop processing of the tree structuring is based on the use of three distinctive variables: n, CURRENT and PREVIOUS which respectively correspond to the current basic block node (containing a sequence of instructions), to the current structure node and to the previous structure node considered in the preceding iteration.

After the creation of an ordered list of node references, the process of figure 18 proceeds with a step 302 where the different variables n, CURRENT and PREVIOUS are initialized. The CURRENT variable is initialized by means of the creation of a new interval which will be used for containing all the other intervals of the graph. The PREVIOUS variable is initialized at NULL and n is initialized within the loop. For each successive processing, the variable n will be set to the current node in the order which was defined by the list of nodes computed in step 301.

A step 303 (For each node n...) achieves the loop processing for the tree structuring, based on the successive processing of the different nodes in the order defined by the list of step 301. The process checks whether there are still nodes to process among the nodes of the sub-graph which correspond to the current interval. If all the nodes have already been processed, then the process returns back to step 304. If there are still intervals to process, the process continues with a step 320, and the content of the n variable is set to refer to the current node.

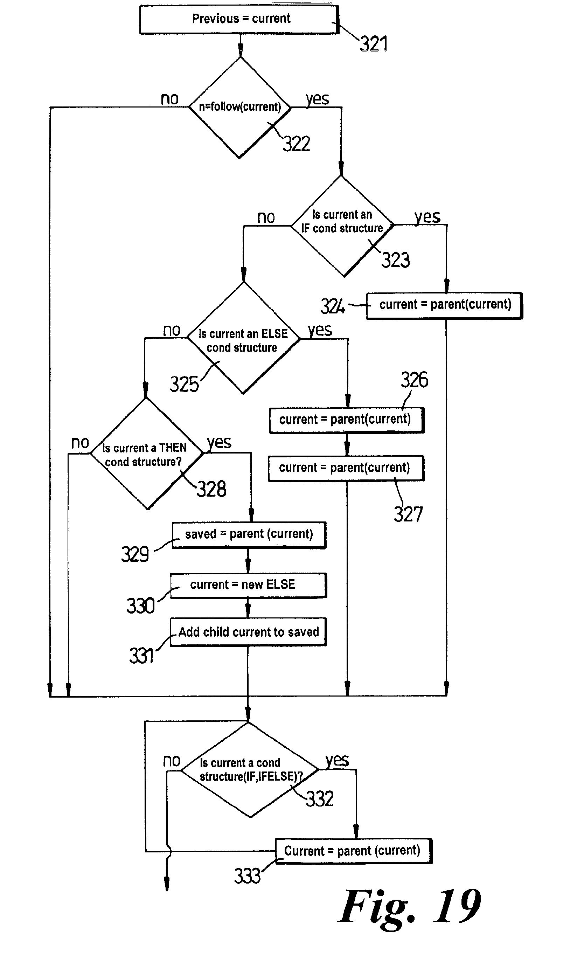

The step 320 is more particularly illustrated in figure 19 and is used for testing the potential exit of a conditional structure, in other words whether the basic block node being processed is the follow node of the current conditional structure. Figure 19 shows that the process then executes a step 321 which sets the PREVIOUS variable to the contents of the CURRENT variable. Then, in a step 322, a test is executed in order to determine whether the current variable n corresponds to the follow node which was determined in step 28 of figure 2, then the process goes to a step 323 and, in the reverse case, the process goes to a step 332.

In step 323, a test is executed in order to determine whether the node which corresponds to the contents of the CURRENT variable (which is a structure variable) is an IF type conditional structure node. If the test succeeds, then the process proceeds with a step 324 and, conversely, the process goes to a step 325.

In step 324, the process assigns to the CURRENT variable the reference to the parent of the current node within the syntax tree. The process then proceeds to step 332.

In step 325, conversely, the process tests the current node to determine whether the latter is a ELSE branch of IF-ELSE type conditional structure, in which case the process reassigns to the CURRENT variable the reference to the parent of its parent via the sequence of step 326 assigning the reference to the parent to the current node, and then a step 327 performing the same operation again. The process then proceeds to step 332. It should be noted that a IF-ELSE conditional structure comprises two branches, each branch being associated to a structure node: a first THEN structure node and a second ELSE structure node.

If the test of step 325 fails, the process then proceeds to a step 328 which is again a test for determining whether the current node corresponds to a THEN branch of a conditional structure, in which case the process executes the sequence of steps 329, 330 and 331. In step 329, the reference to the parent of the current node is saved within a variable named SAVED. In step 330, the process causes the creation of a new node - of the type ELSE structure node - within the syntax tree. In step 331, the CURRENT variable is added as the last child of the structure node referenced by the variable SAVED. The process then proceeds to the step 332.

If the test of step 328 fails, the process then proceeds to step 332 which checks whether the CURRENT variable is a conditional structure of the type IF, IF ELSE, in which case the process assigns to the CURRENT variable the reference to its parent in a step 333. Step 333 loops back to step 332 and if the test of 332 fails, the loop is exited. As shown in the figure 19, steps 332 and 333 embody a classical WHILE loop structure.

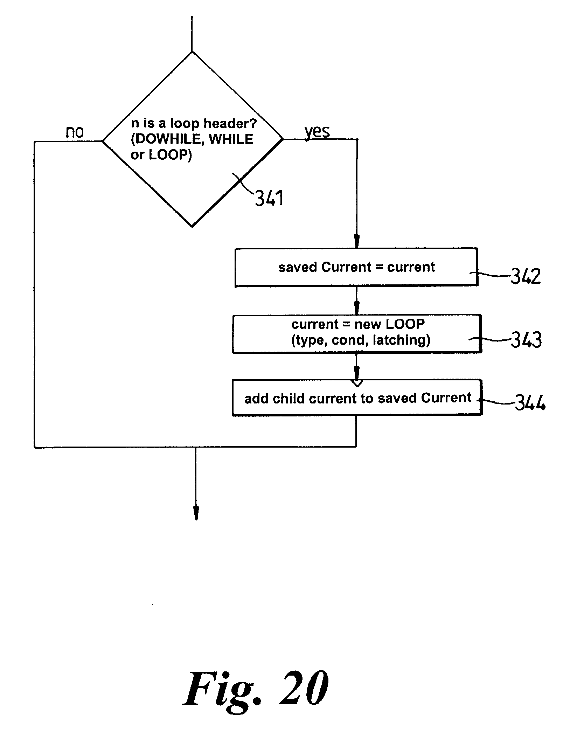

When the step 320 of figure 18 completes, the process then proceeds with a step 340 which is more particularly illustrated in figure 20 and which is used to test for the potential entry of a loop, in other words whether the basic block node being processed is a loop header. Figure 20 shows that the process executes a step 341 which is a test for determining whether the n variable corresponds to the header of a loop structure (such as a DO-WHILE, a WHILE or a LOOP), in which case the process proceeds to a step 342 where the reference to the current structure node is saved in a variable SAVED CURRENT. The process then proceeds to a step 343 where a new loop structure is created which is associated with three attributes being defined by the loop header n. Indeed, it should be noted that the marking operations which were described in step 27 lead to the definition of the three attributes for each loop header node: type of loop (WHILE, DOWHILE or LOOP), condition (i.e. a boolean expression) and the latching node. The newly created structure node is then associated to the CURRENT variable. The process then proceeds to a step 344, where the CURRENT variable is added as the last child of the structure node referenced by the variable SAVED CURRENT. The process then proceeds to the step 350 what is also executed when the test of step 341 fails.

In step 350, the process adds the variable n as the last child of the CURRENT structure.

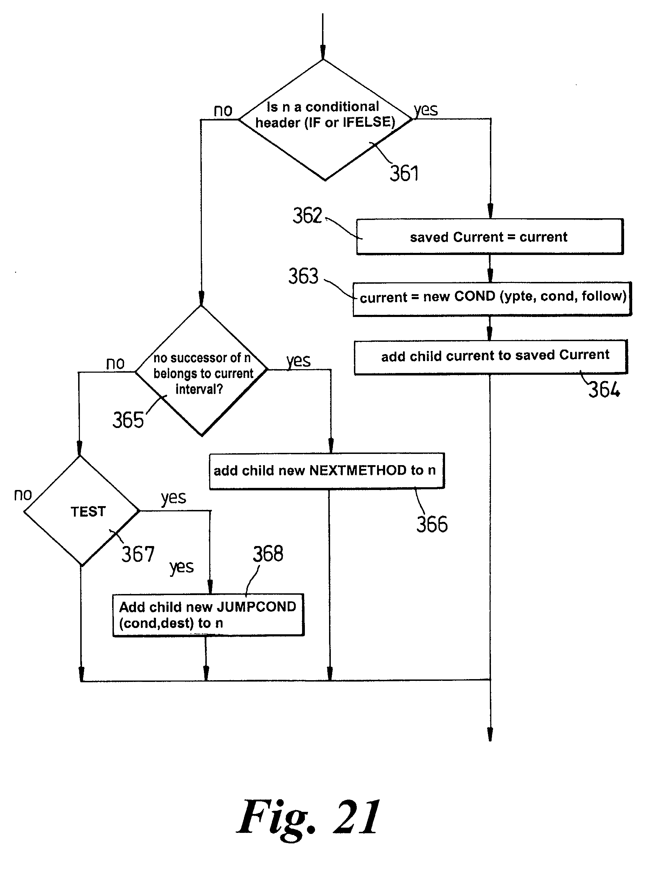

Then, the process proceeds with a step 360 which is more particularly illustrated in figure 21 and which is used for testing the potential entry of a new conditional structure, in other words whether the basic block node being processing is the header of a conditional structure. Figure 21 shows that the process then executes a step 361 which is a test for determining whether the n variable corresponds to the header of a conditional structure (such as an IF or lF-ELSE), in which case the process proceeds to a step 362 where the reference to the current structure node is saved in a variable SAVED CURRENT. The process then proceeds to a step 363 where a new conditional structure is created which is associated to three attributes being defined by the corresponding conditional header n. Indeed, it should be noted that the marking operations which were described in step 28 lead to the definition of the three attributes for each conditional header node: type of condition (IF or IF-ELSE) , condition (i.e. a boolean expression) and the follow-node. The newly created structure node is then associated to the CURRENT variable. The process then proceeds to a step 364, where the CURRENT variable is added as the last child of the structure node referenced by the variable SAVED CURRENT. The process then proceeds to the step 370.

If the test of step 361 fails, then the process proceeds to a step 365 which is a test for testing whether no successor of the n variable belongs to the CURRENT structure or interval.

If the test of step 365 succeeds, then the process creates a new instruction node of a type NEXT METHOD in a step 366. This will be used for leaving the current method and for determining the next one which will be invoked. This newly created child is then added as the last child of the block node n. The process of step 360 then completes.

Conversely, if the test of step 365 fails, the process goes to a step 367 which is a test performed on the current node n in order to determine whether the latter has two successors, AND whether it is not a latching node, and whether it is not a header of a WHILE loop.

If this is true, the process proceeds to a step 368 where a new instruction node of a type JUMPCOND which is associated to two attributes: condition (boolean expression) and the destination of the jump, ie a reference to another block node. This will be replaced later by a CONTINUE or BREAK Java instruction. The process of step 360 then completes.

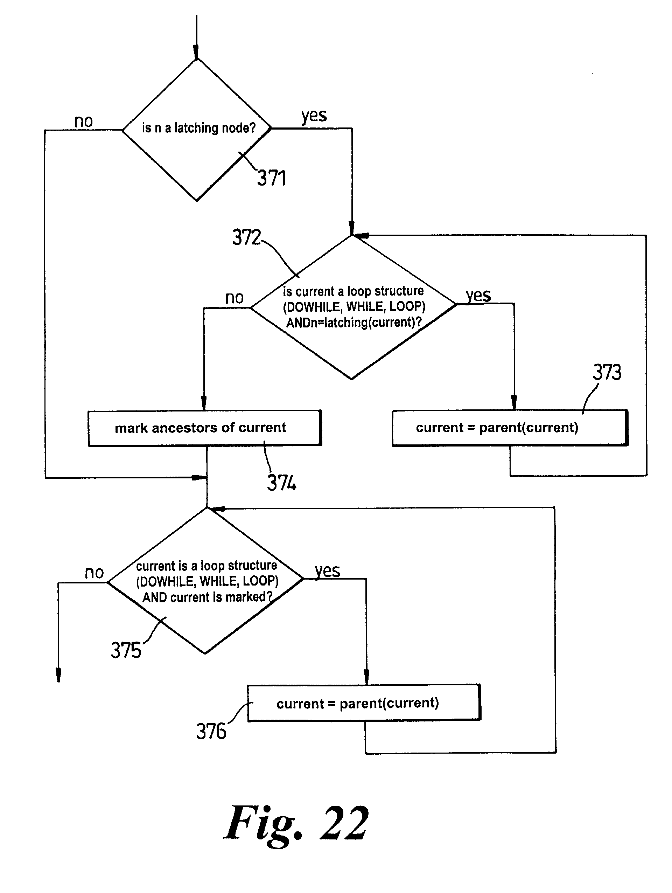

The completion of step 360 of figure 18 is then followed by a step 370 which is more particularly illustrated in figure 22 and which is used for testing the potential exit of a loop, in other words whether the basic block being processed is the latching node of the current loop. Figure 22 shows that the process then executes a step 371 which is a test for determining whether the n variable is a latching node, in which case the process goes to a step 372 and, conversely, the process goes to a step 374.

In step 372, the process performs a test for determining whether the CURRENT variable is associated with a loop structure (DOWHILE, WHILE or LOOP) and whether the n variable is the latching node of the CURRENT structure. If these two conditions are satisfied, then the process goes to a step 373 which assigns to the CURRENT variable the reference to its parent. The process then loops back to step 372.

If the test of step 372 fails, the process then proceeds with a step 374 where all the ancestors of the CURRENT node are marked as such. The process then proceeds with a step 375 which is a test to determine whether the CURRENT variable is associated with a loop structure (DOWHILE, WHILE or LOOP) and, further to check whether the CURRENT variable is already marked (as an ancestor of CURRENT). If those two conditions are satisfied, then the process goes to a step 376 which assigns to the CURRENT variable the reference to its parent and the process then loops back to step 375.

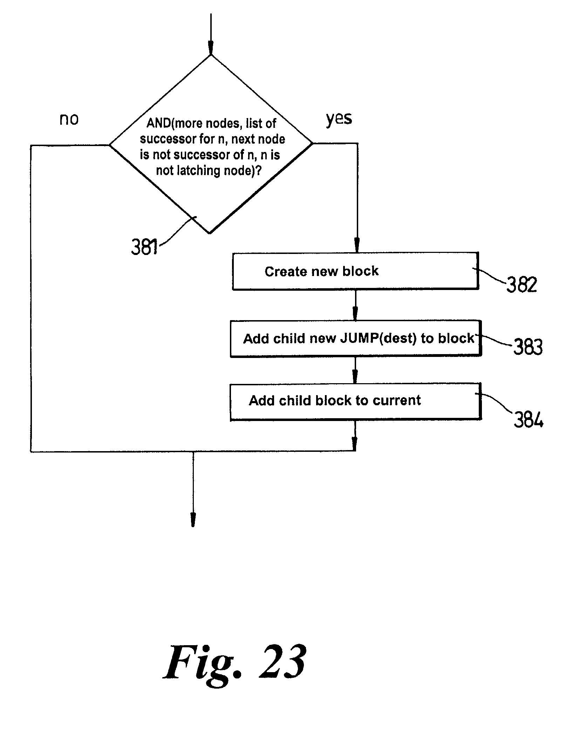

When the test of step 375 fails, the process of step 370 completes and a step 380 of figure 19 is then executed which is more particularly illustrated in figure 23 and which is used for testing whether a new jump is required. A jump statement is required when not all of the paths through the Control Flow Graph are reflected in the syntax tree by means of other control flow structures. Figure 23 shows that the process then executes a step 381 which is a test to determine whether the four conditions described below are simultaneously fulfilled. Such jump statements will be subsequently replaced by one-shot loops as described below.

A first condition is the existence of additional nodes to process within the sequence of the references computed in step 301.

A second condition consists in the existence of successors for the block node n.

A third condition is the fact that the next node to process (within the ordered list computed in step 301) is not a successor of the block node referenced by the variable n.

A fourth condition consists in the fact that n variable does not correspond to a latching node.

If one of these conditions is not satisfied, the process of step 380 completes and, conversely, if these four conditions are not fulfilled, the process then proceeds to a step 382 where a new block node is being created for the purpose of receiving a subsequent new instruction node. This block node is the first one which is created and will be handled by the subsequent steps 383 and 384. Step 383 creates the new instruction node of the type JUMP and which is associated to the DEST variable referring to one preexisting block node. This newly created JUMP node is added as a last child of the above mentioned newly created block node.

In a step 384, the process adds the newly created block node as a last child of the node referred by the CURRENT variable.

When the process of step 380 completes, the process loops back to step 303 of figure 18.

It can be seen that the tree structuring algorithm which was described above in detail complies with the following rules:
- the header and the latching nodes of a loop belong to this loop;
- the header and the follow nodes of a conditional structure do not belong to the loop;
- an abnormal control flow that does not correspond to a loop or a conditional structure is a conditional or unconditional jump to another basic block.

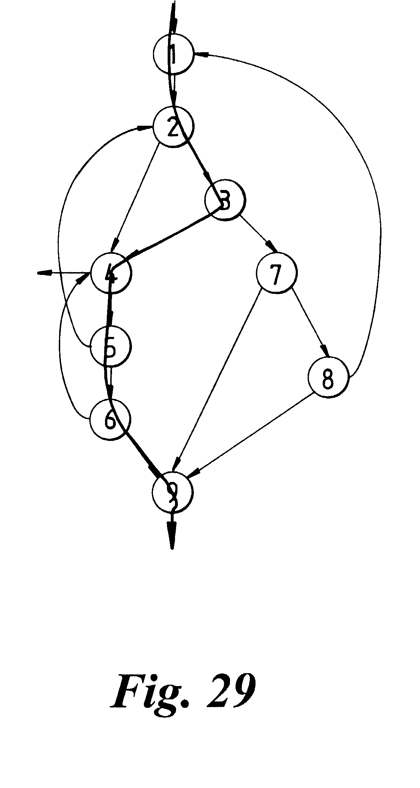

In the following, there is provided an illustrative example of the structuring tree algorithm in high-level meta language and the effect of such a tree structuring is shown in the figure 28.

### Example 7

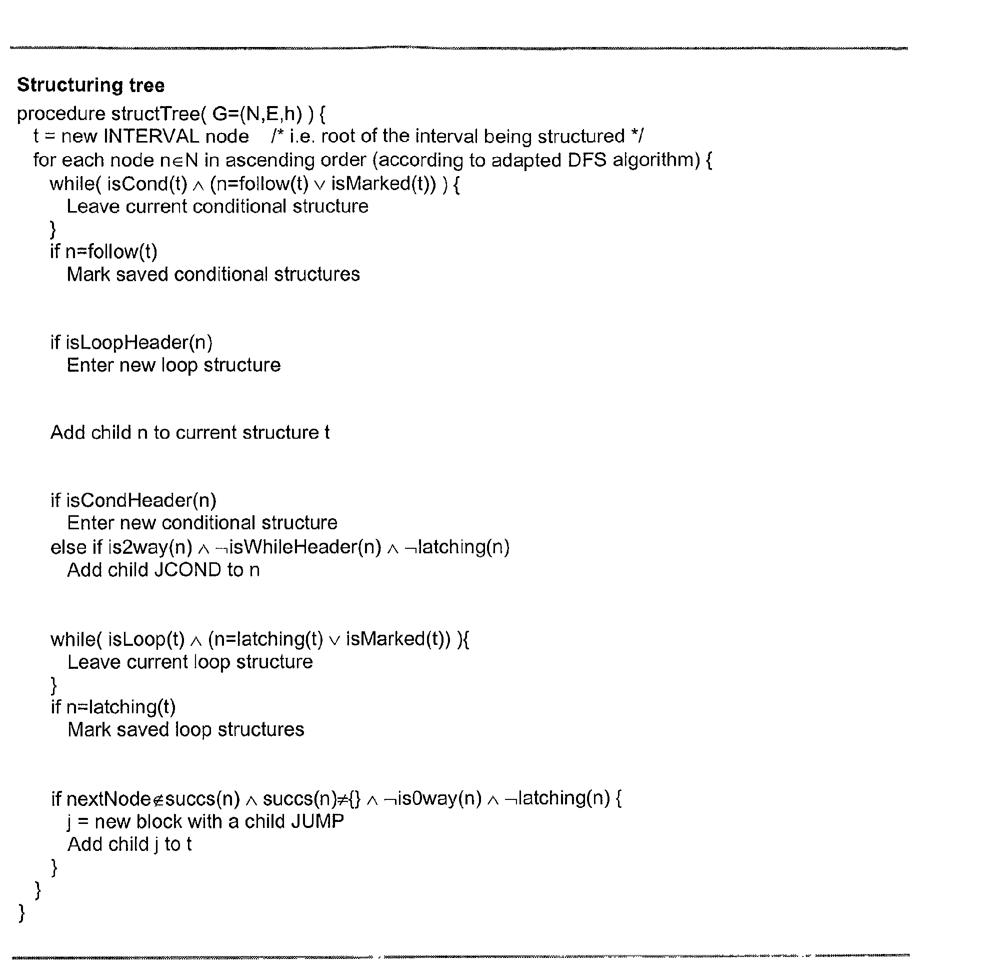

### Tree Augmentation

Step 30 of Fig 2 corresponds to the tree augmentation process. This process enables the last conditional and unconditional jump statement to be removed, by translating them with CONTINUE or BREAK Java statements.

Background information regarding the process of control flow graph augmentation can be found in prior art document "Eliminating GOTO's while Preserving Program Structure", L. RAMSHAW, Jul, 1985. The method described in RAMSHAW consists in adding additional edges, corresponding to labeled repeat-forever loops, to the sequence of code instructions. Then, multi-level break statements can be used to translate many structures that cannot be translated with WHILE or IF-THEN-ELSE statements. When there is no other possibility (in the case of head-to-head crossing structure, for example), the GOTO statement is not removed.

Flow graph augmentation in accordance with the prior art technique is made by adding edges to the graph, and stretching the added edges until the structure obtained does not cross any other structure.

The process employed in the present implementation eliminates these time consuming "edge stretching" operations by directly adding nodes in the syntax tree and moving other nodes under the new one instead of augmenting the control flow graph.

This process is more efficient because the appropriate size for the one-shot loop is obtained directly from the position of the added structure node in the tree, instead of via repeated stretching operations performed on the instruction sequence. Moreover, the tree augmentation process does not need to check if the added one-shot loop crosses another structure, while the augmentation process described in RAMSHAW needs to check this for each step of the edge-stretching phase.

An further advantage comes from the fact that a one-shot loop ("do-while(false)") is used that is executed only once, instead of a repeat-forever loop. A one-shot loop does not add any semantic, and does not need a break statement to exit it.

Finally, the minimum number of added one-shot loops is used in order to decrease number of nested structures. Indeed, the maximum number of true loop and conditional structures (i.e. that can be translated at such) are detected, and useless one-shot loops are removed.

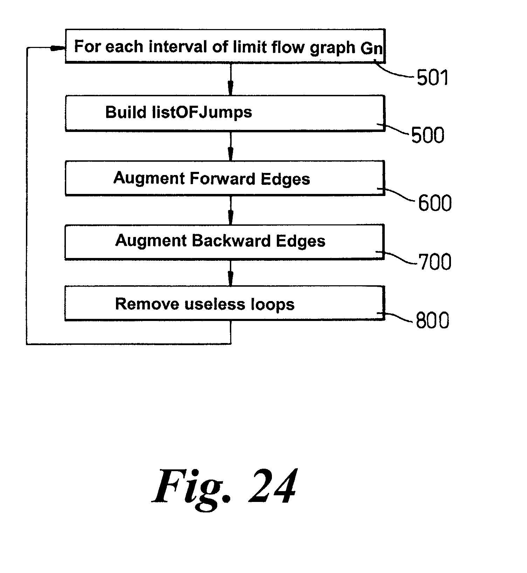

There will now be described in detail the process of tree augmentation with reference to figure 24. Tree augmentation results in a change of the representation of the syntax tree stored within the memory for the purpose of eliminating the need for GOTO statements. The tree augmentation results from the iterative execution of steps 501, 500, 600, 700 and 800 which are represented in figure 24.

In a step 501, the process checks whether there are still intervals to process among the intervals of the limit flow graph Gⁿ. If all the intervals have already been processed, then the process leaves the step 30 (Tree Augmenting) and can proceed to a code generation phase (which simply consists in a depth first traversal of the augmented tree). If there are still intervals to process, the process obtains a reference to one of the unprocessed intervals and continues with a step 500.

Steps 501, 500, 600, 700 and 800 of figure 24 constitute a loop, which is used for successively processing each interval of the limit flow graph Gⁿ (the order does not matter). Each interval corresponds to a sub-tree, and only this sub-tree is considered during the current iteration of this loop.

In a step 500, the process computes the chained list of the branches of the originating code. For this purpose, one successively processes the nodes of the syntax tree and saves within the chained list all the nodes which correspond to basic blocks and which contain a branching instruction.

In a step 600, a first augmentation of the syntax tree is performed which corresponds to the introduction of additional loops associated with forward edges.

In a step 700, a second augmentation of the syntax tree is performed which corresponds to the introduction of additional loops associated with backward edges.

In a step 800, the process scans the different loops which were introduced for the purpose of removing those which are not necessary.

When the process of step 800 completes, the process loops back to the step 501.

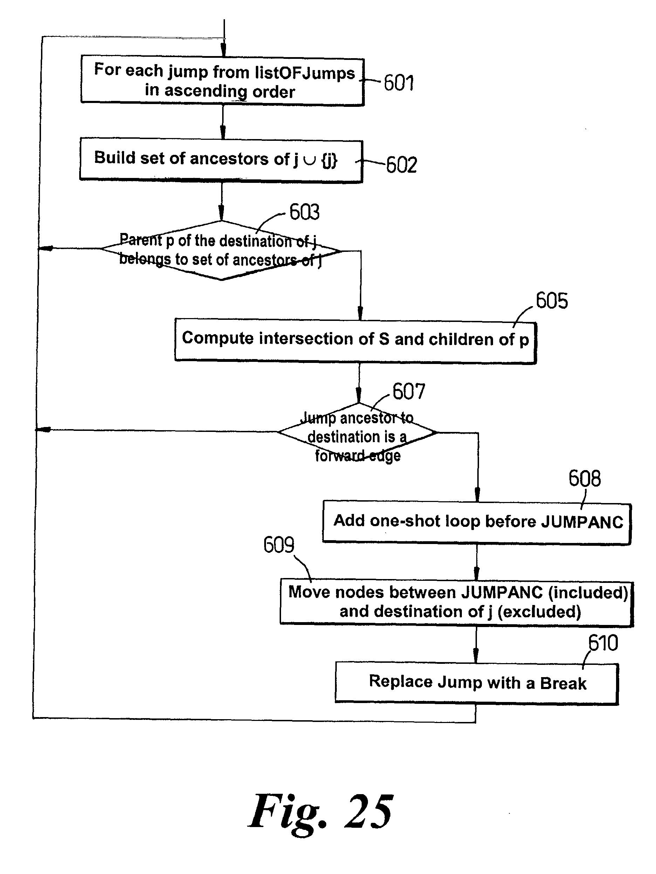

With respect to figure 25 there will now more particularly be described the tree augmentation process of step 600 which generates the introduction of additional loops corresponding to forward edges. For this purpose, a "For each node j" step 601 is used which permits scanning in a ascending or upstream order the branching nodes which were saved in the chained list computed in the step 500 of figure 24.

The process then proceeds with a step 602 where, for the current node being considered in step 601, a set S is computed containing the ancestors corresponding to the current node j and the current node j itself.

In a step 603, the process tests whether the parent p of the destination of the current node j belongs to the set S, in which case the process goes to a step 605. If the test fails, the process loops back to step 601 to process the node corresponding to the next value of j.

In step 605, the process determines the node that is the intersection of the set S with the set containing all the children of p. It should be noted that only one node is likely to satisfy this condition. This particular node is associated with a variable which is entitled JUMP ANC.

The process then proceeds to a step 607 which is a test for determining whether the edge which comes from the destination node and goes to the JUMP ANC is a forward edge, in which case the process goes to a step 608. Conversely, the process loops back to step 601 for the purpose of processing a node corresponding to the next value of j.

In step 608, the process introduces in the representation of the syntax tree which is stored within the memory of the computer an additional node which corresponds to a loop structure of the type ONE-SHOT, that is to say a particular loop which is only executed once by the program. More particularly, it should be observed that the process introduces this ONE-SHOT node at a place corresponding to the brother position of the JUMP ANC node, the latter being itself located before the JUMP ANC node.

The process then proceeds to a step 609 where the representation of the syntax tree is changed in such a way as the all the nodes located between the JUMP ANC node (included) and the destination node (excluded) are moved and newly relocated as sons of the newly created ONE-SHOT node.

The process then proceeds to a step 610 where the JUMP instruction contained within the node of the syntax tree is replaced with a Java Break instruction which is used for the reference to the ONE-SHOT node which was created.

The process then loops back to step 601 again for the purpose of processing the next node j.

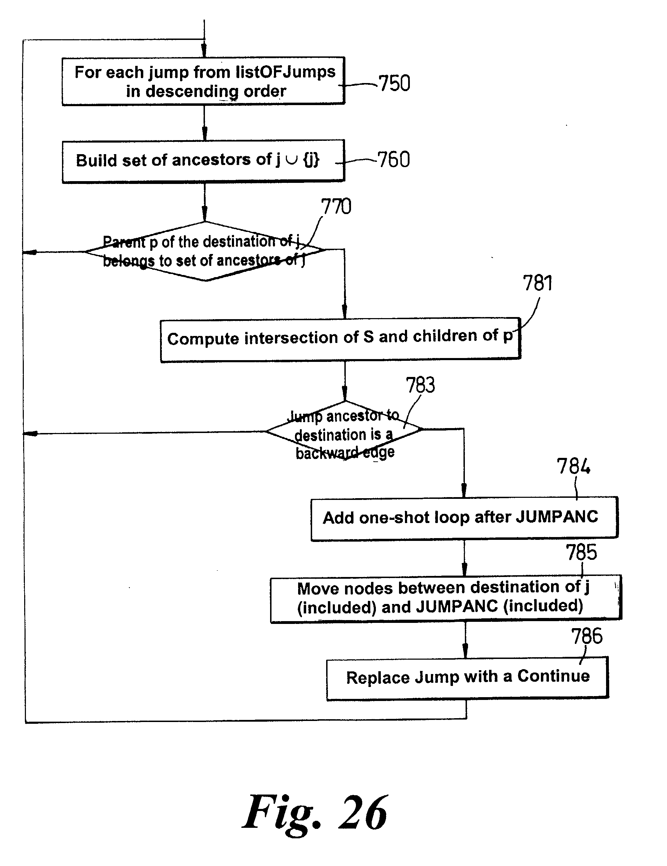

With respect to figure 26 there is now described the tree augmentation process which is executed for the purpose of introducing additional loops corresponding to backward edges. For this purpose, one uses a "For each node j" step 750 which permits to scan in a descending or a downstream order the branching nodes which were saved in the chained list computed in the step 500 of figure 24.

The process then proceeds with a step 760 where, for the current node being considered in step 601, a set S is computed containing the ancestors corresponding to the current node j.

In a step 780, the process tests whether the parent p of the destination of the current node j belongs to the set S, in which case the process goes to a step 781. Conversely, the process loops back to step 750 for the purpose of processing a node corresponding to the next value of j.

In step 781, the process determines the particular node of the set, which is the intersection of the set S with the set containing all the children of p. It should be noted that only one node is likely to satisfy this condition. This particular node is associated with a variable which is entitled JUMP ANC.

The process then proceeds to a step 783 which consists of a test for determining whether the edge which comes from the destination nodeand goes to the JUMP ANC is a backward edge, in which case the process goes to a step 784. Conversely, the process loops back to step 750 for the purpose of processing a node corresponding to the next value of j.

In step 784, the process introduces in the representation of the syntax tree which is stored within the memory of the computer an additional node which corresponds to a loop structure of the type ONE-SHOT, that is to say a particular loop which is only executed once by the program. More particularly, it should be observed that the process introduces this ONE-SHOT node at a place corresponding to the brother position of the JUMP ANC node, the latter being itself located after the JUMP ANC node.

The process then proceeds to a step 785 where the representation of the syntax tree is changed in such a way as the all the nodes located between the JUMP ANC node (included) and the destination node (included) are moved and newly relocated as sons of the newly created ONE-SHOT node.

The process then proceeds to a step 786 where it replaces the JUMP instruction contained within the node of the syntax tree with a Java CONTINUE instruction which is used for the reference to the ONE-SHOT node which was created.

The process then loops back to step 601 again for the purpose of processing the next node j.

For clarity's sake, an illustrative example of an algorithm for steps 600 and 700 is provided below.

### Example 8

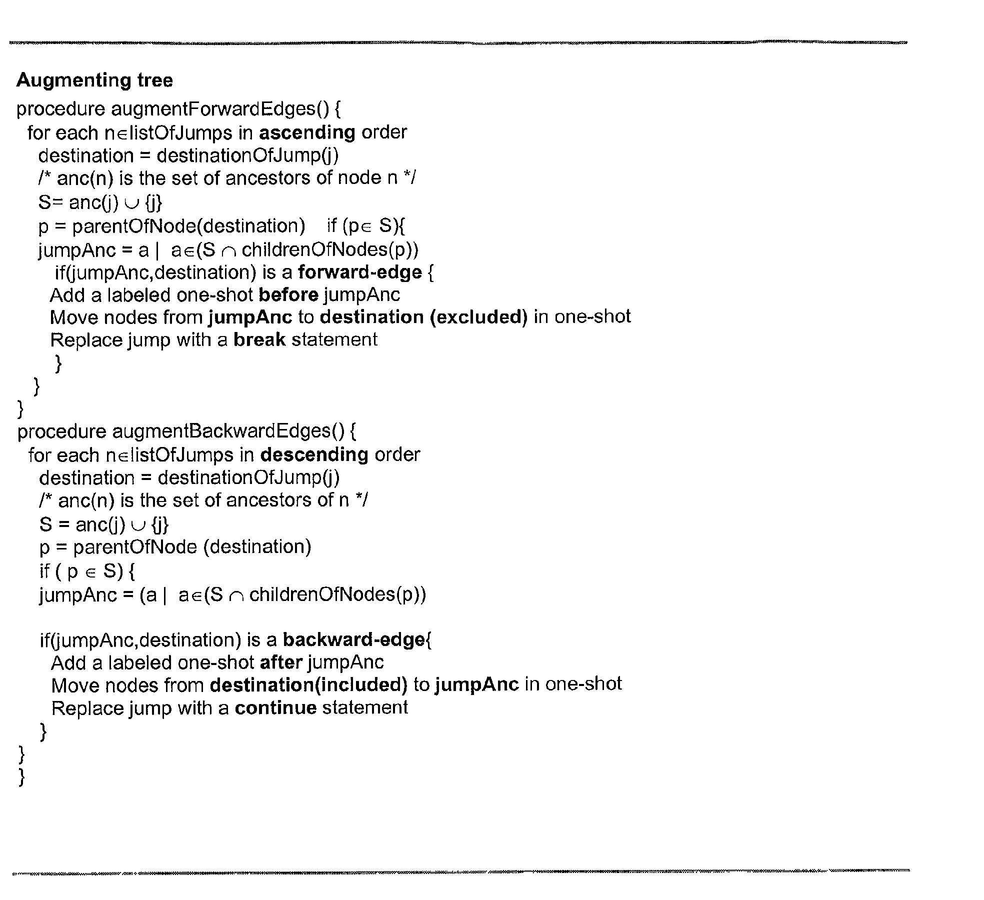

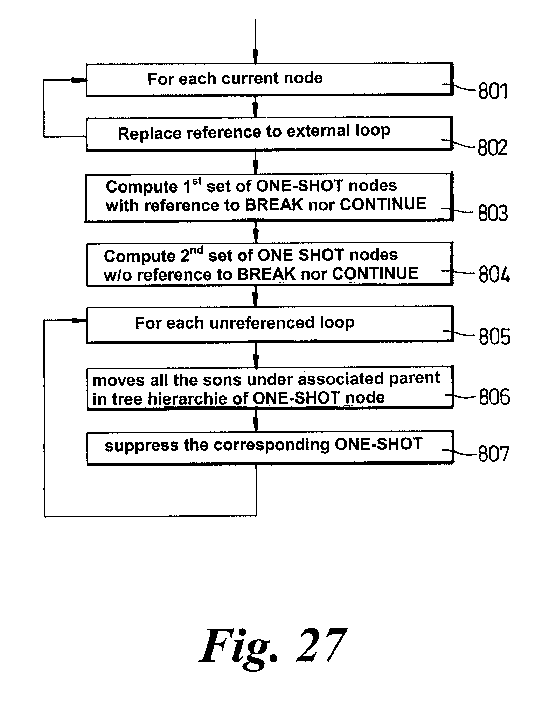

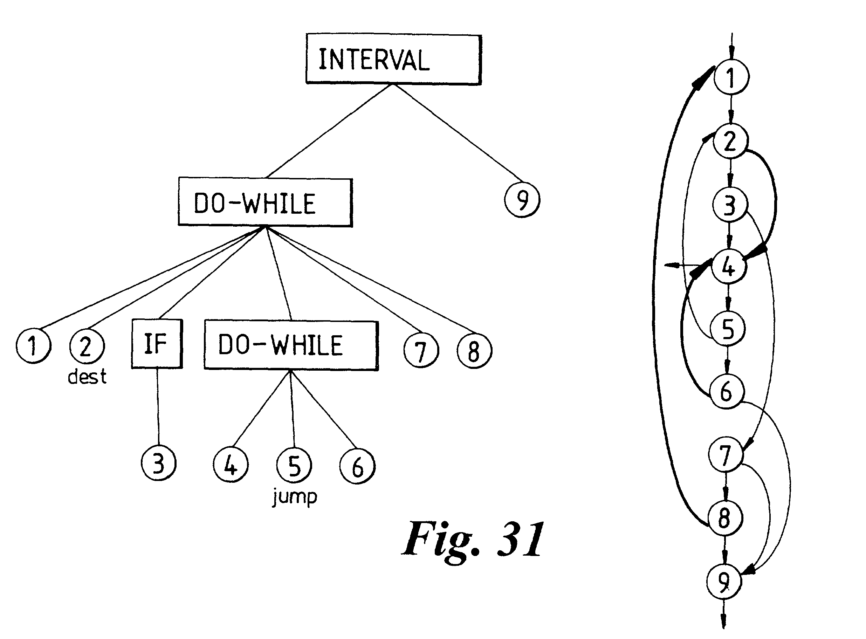

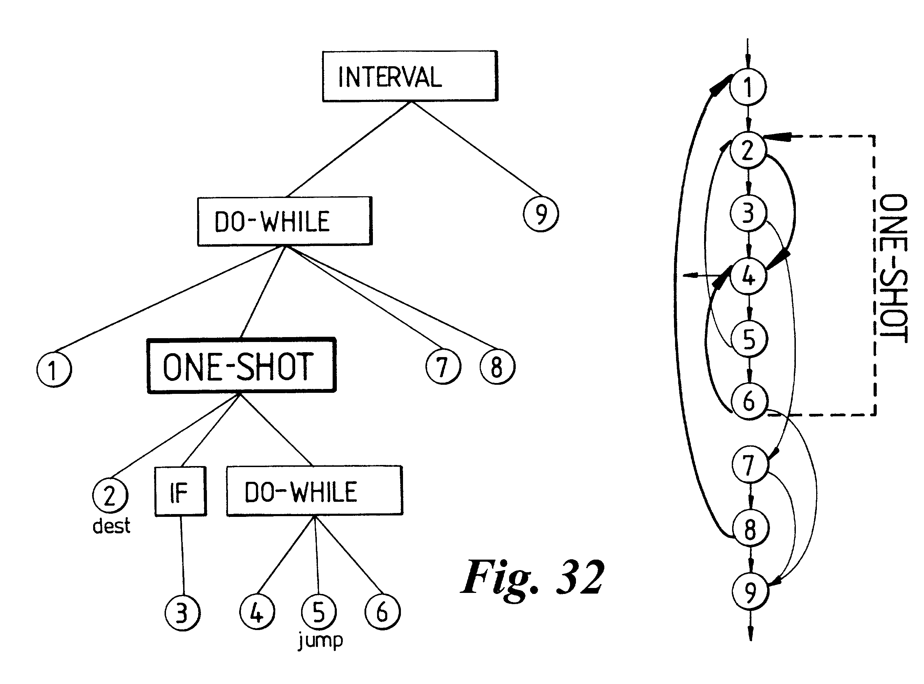

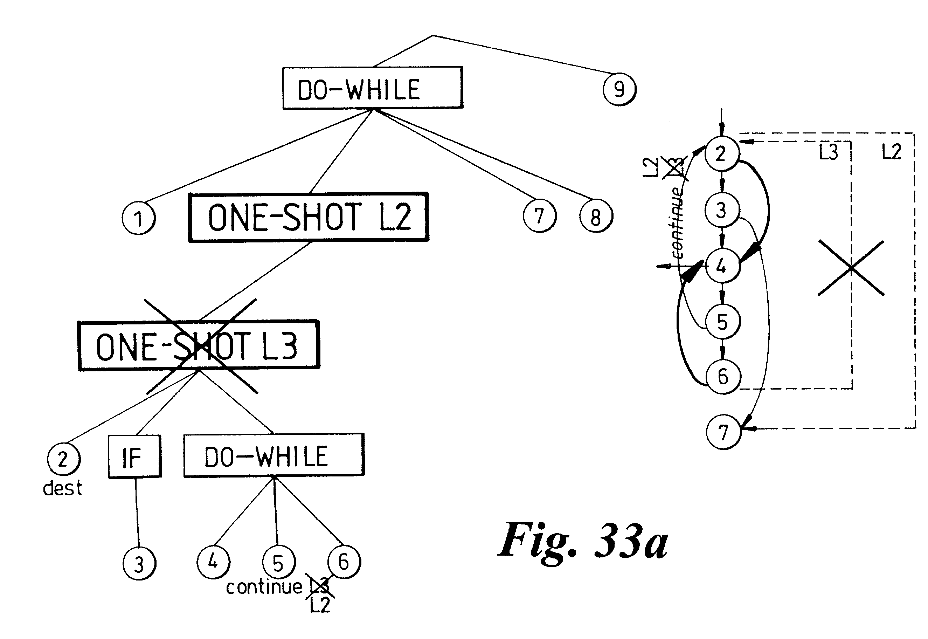

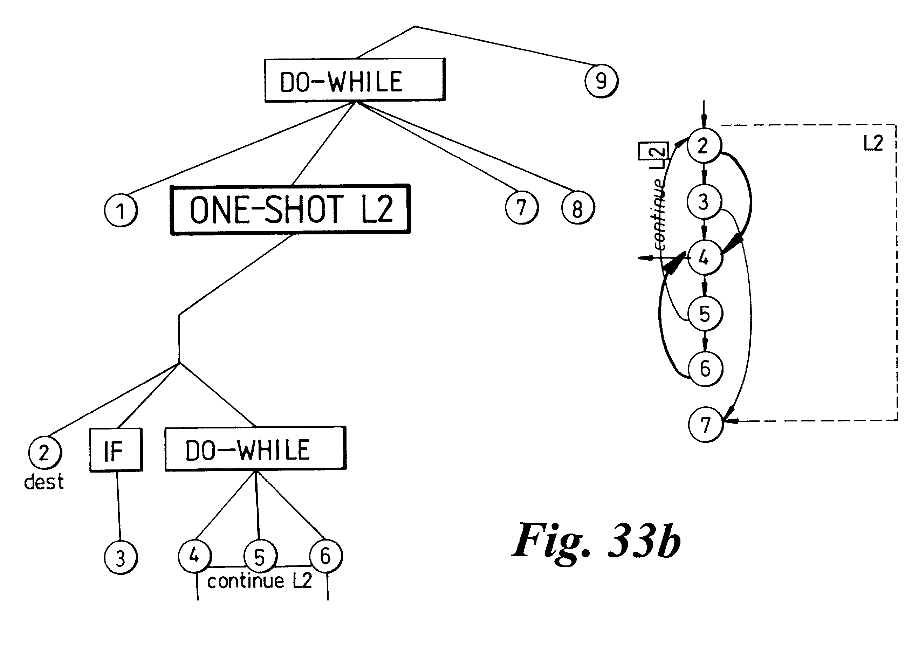

The direct introduction of additional nodes within the syntax tree is particularly illustrated in figures 31 and 32 which shows the application of the method to a sub-tree (the root of which is node "INTERVAL a") of the syntax tree of figure 28. There will now be described with respect to figures 27, 33a and 33b in detail the process of step 800 used for suppressing unnecessary loops which were possibly introduced by the steps 600 and 700.

The process starts with a step 801 of the type of "For each current node" which is used for initiating a loop which successively processes, in an ascending or upstream way, all the nodes which correspond to basic blocks, i.e. which contain CONTINUE or BREAK instructions. As explained above, those nodes were listed in the step 500 of the process.

For each node corresponding to a CONTINUE or BREAK instruction, the process replaces in a step 802 the reference associated to that CONTINUE or BREAK loop to a loop which is as remote and external as possible, while not modifying the semantic of the syntax tree. To achieve this, a recursive algorithm which complies with the following requirements may be used:

The node which was newly referenced is associated with a loop structure of the type ONE-SHOT;

The node which was newly referenced is the older ancestor of the loop which was originally referenced;

The semantic of the syntax tree remains unchanged. In the case of a BREAK instruction, there should be no instruction between the end of the originally referenced loop and the newly referenced loop. In the case of a CONTINUE instruction, there should be no instruction between the beginning of the loop originally referenced and the newly referenced loop.

The process then proceeds back to step 801 again, for the purpose of processing all the nodes of the list of nodes which was computed in step 500.

When all the nodes are processed, the process proceeds with a step 803 which computes a first set of nodes corresponding to structures of the type ONE-SHOT, and which are assigned at least one reference of the type BREAK or CONTINUE.

The process then proceeds to a step 804 where a second set of nodes is computed which contains nodes corresponding to loop structures of the type ONE-SHOT and which are assigned no reference to a CONTINUE or a BREAK instruction. This is achieved by removing from all the nodes corresponding to a ONE-SHOT type the particular nodes of the first set of ONE-SHOT nodes computed in step 803.

In a step 805 the process then uses a loop of the type "For each unreferenced loop" for successively scanning the nodes of this second set of nodes and, for every node of this loop corresponding to a ONE-SHOT loop structure not referenced, the process moves, in a step 806, all the sons under the associated parent in the tree hierarchy of the ONE-SHOT node so that these sons are located between the predecessor and the successor of this node. In a subsequent step 807, the process suppresses the corresponding ONE-SHOT node for the purpose of simplifying the structure of the syntax tree.

The process then loops back to step 805 for the purpose of processing the remaining nodes of the set of nodes constructed in step 804.

Further to this last processing step, the resulting syntax tree which is stored within the memory of the computer, and which was fully structured by means of the process of figure 2, can be translated into a set of Java classes since no GOTO statements remain within the structures. It can be seen that the solution allows any unstructured MEP-CFG to be translated, without requiring any GOTO statements, into legible and efficient code.

It should be noted that Java compilers will not detect errors if, for instance, a method is deleted by the user from the generated Java code, because of the use of the invoke method. This is the reason why it can be advantageous to provide a tool which checks for coherence between the returned method names and the called methods.

In most cases, it should be observed that the process provides a legible code which is only jeopardized in the situations of specific and complex crossing structures which are not transformed with node splitting.

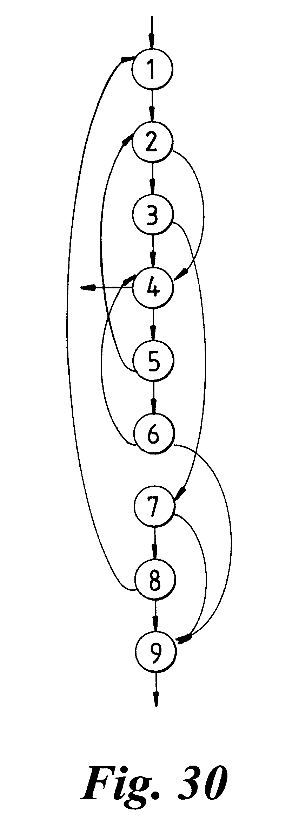

Figure 30 illustrates the effect of a node reordering process performed on the illustrative sub-graph corresponding to the interval I1 of figure 13. This process aligns and reorders the nodes according to the ordered list of node references computed in step 301. The goal of such a process would be to allow, in an alternative embodiment of the invention, the use of the RAMSHAW augmentation technique, in order to remove all the remaining goto statements.

Figure 31 illustrates the effect of the tree structuring process performed on the illustrative graph of figure 29. Note that the tree structuring process also reorders the nodes at the same time, according to the ordered list of node references computed in step 301.

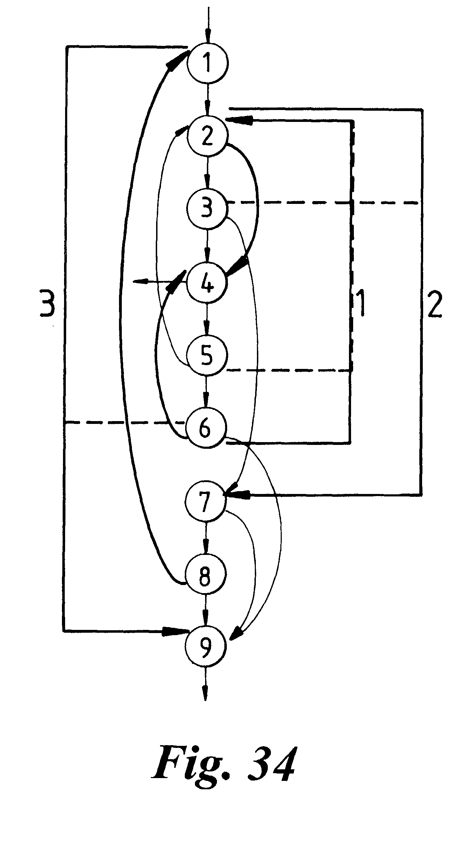

Figure 34 shows resulting Java code.

It will be understood that the techniques described may be compiled into computer programs. These computer programs can exist in a variety of forms both active and inactive. For example, the computer program can exist as software comprised of program instructions or statements in source code, object code, executable code or other formats. Any of the above can be embodied on a computer readable medium, which include storage devices and signals, in compressed or uncompressed form. Exemplary computer readable storage devices include conventional computer system RAM (random access memory), ROM (read only memory), EPROM (erasable, programmable ROM), EEPROM (electrically erasable, programmable ROM), and magnetic or optical disks or tapes. Exemplary computer readable signals, whether modulated using a carrier or not, are signals that a computer system hosting or running the computer program can be configured to access, including signals downloaded through the Internet or other networks. Concrete examples of the foregoing include distribution of executable software program(s) of the computer program on a CD-ROM or via Internet download. In a sense, the Internet itself, as an abstract entity, is a computer readable medium. The same is true of computer networks in general.

While this invention has been described in conjunction with the specific embodiments thereof, it is evident that many alternatives, modifications and variations will be apparent to those skilled in the art. Also, it will be apparent to one of ordinary skill that the configuration application may be used with services, which may not necessarily communicate over the Internet, but communicate with other entities through private networks and/or the Internet. These changes and others may be made without departing from the spirit and scope of the invention.

## Claims

1. Process for structuring program code, comprising the steps of:
- procuring a syntax tree representative of an input program code;
- procuring a control flow graph representing the control flow of said input program code;
- collapsing nodes of the control flow graph so as to obtain a derived graph in which the nodes are each single entry point reducible control flow sub-graphs of the control flow graph;
- structuring program code corresponding to each sub-graph so that at least some goto statements in the input program code are represented by loops or conditional structures;
- defining subprograms each based on one of said structured subgraphs, so that the subprograms can be chained in accordance with the derived graph to form output program code having functionality substantially equivalent to that of the input program code.

2. A process as claimed in claim 1 wherein at least some goto statements are replaced by one-shot loops by introducing loop structure nodes directly in the syntax tree to depend from a common ancestor of the goto statement and the target thereof, the basic blocks in the same branches of the syntax tree as the goto statement and its target and the branches inbetween being moved to depend from the introduced loop structure node, the goto statement being replaced by a break or continue statement.

3. A process as claimed in claim 1 or claim 2 wherein the structuring step comprises:
- detecting in the sub-graph cycles with single entry points and marking such cycles as loops;
- detecting potential conditional structures in the sub-graph;
- scanning the detected conditional structures in a descending depth first search sequence, marking as conditional structures those of said detected potential conditional structures wherein no path from the header node of the structure to the first node of the structure where any two paths from the header meet is crossed with a marked loop or a previously marked conditional structure,
- introducing in the syntax tree loop structures and conditional structures corresponding to the marked loops and conditional structures in such a way that branch statements remaining in the portion of the input program code corresponding to the sub-graph can be replaced by one shot loop structures to form an output code having functionality substantially equivalent to that portion of the input program code.

4. A process as claimed in claim 3 wherein the marking of the loops and conditional structures comprises marking their respective headers and follow nodes and the introducing step comprises:
checking the nodes of the control flow sub-graphs in a depth first search sequence for being the header or follow node of a structure and,
if the node is a header of a structure, creating in the syntactic tree a structure node of a type associated with that structure,
moving the nodes in the syntactic tree that correspond to nodes traversed in the DFS sequence to depend from the created structure node,
if a node is a follow node of a structure, continuing the DFS sequence, the next structure node created being placed to depend from the parent of the structure node associated with that follow node, the above steps being recursively repeated for the moved nodes.

5. A process as claimed in claim 4 wherein the follow node for a conditional structure is identified as the node reachable from the header node via at least two paths, one of which paths is the shortest path to a node reachable from the header node via at least two paths.

6. A process as claimed in any preceding claim wherein the derived graph is a limit graph comprising the lowest number of reducible single entry point sub-graphs.

7. A process a claimed in claim 6 wherein the control flow graph is a multiple entry point flow graph and is decomposed into single entry point flow graphs using interval analysis to generate a set of disjoint, maximal and reducible sub-graphs.

8. A process as claimed in claim 7 wherein the intervals generated by the interval analysis are used to detect loops in the single entry point flow graphs.

9. A process as claimed in any preceding claim wherein the sub-programs are chained using a state machine.

10. A computer program product comprising program code elements for carrying out a process as claimed in any preceding claim.
